# EUROPÄISCHE PATENTSCHRIFT

(11) **EP 3 292 009 B1**
(45) Veröffentlichungstag und Bekanntmachung des Hinweises auf die Patenterteilung: **10.07.2019**
(21) Anmeldenummer: 16720119.3
(22) Anmeldetag: 03.05.2016
(51) Int. Cl.: B60J 5/04

(54) **TÜRMODUL, KRAFTFAHRZEUGTÜR UND VERFAHREN ZUR FESTLEGUNG EINES TÜRMODULS AN EINER TÜRSTRUKTUR**
DOOR MODULE, MOTOR VEHICLE DOOR AND METHOD FOR SECURING A DOOR MODULE ONTO A DOOR STRUCTURE
MODULE DE PORTE, PORTE DE VÉHICULE AUTOMOBILE, ET PROCÉDÉ DE FIXATION D'UN MODULE DE PORTE À UNE STRUCTURE DE PORTE

(30) Priorität: 05.05.2015 DE 102015005885; 10.09.2015 DE 102015217346
(43) Veröffentlichungstag der Anmeldung: 14.03.2018
(73) Patentinhaber: Brose Fahrzeugteile GmbH & Co. Kommanditgesellschaft, Bamberg, 96052 Bamberg (DE)
(72) Erfinder: FISCHER, Matthias, 96274 Itzgrund (DE); LEHNHARDT, André, 97483 Eltmann (DE); HÜMMER, Norman, 96250 Ebensfeld (DE); JAHN, Michael, 96148 Baunach (DE); HERZOG, Hans, 96129 Strullendorf (DE); THIENEL, Michael, 95349 Thurnau (DE); HOFMANN, Gerhard, 96049 Bamberg (DE); HAUBOLD, Thomas, 95326 Kulmbach (DE)
(74) Vertreter: Maikowski & Ninnemann Patentanwälte Partnerschaft mbB
(86) Internationale Anmeldenummer: PCT/EP2016/059863
(87) Internationale Veröffentlichungsnummer: WO 2016/177711

(56) Entgegenhaltungen:
- EP-A2- 1 486 366
- DE-A1-102012 023 588
- DE-A1-102013 213 711
- US-A1- 2003 188 492

## Beschreibung

Die vorliegende Erfindung betrifft ein Türmodul für eine Kraftfahrzeugtür nach dem Oberbegriff des Anspruchs 1, eine Kraftfahrzeugtür gemäß Anspruch 11 sowie ein Verfahren zur Verbindung eines Türmoduls mit einer Türstruktur nach Anspruch 14.

Ein derartiges Türmodul einer Kraftfahrzeugtür umfasst einen Modulträger, der zu einem wesentlichen Teil durch Organoblech gebildet ist, sowie mindestens ein Funktionselement, insbesondere in Form einer Führungsschiene eines Kraftfahrzeugfensterhebers, das an dem Modulträger angeordnet ist. In dem Organoblech des Modulträgers ist ein Kanal einstückig ausgeformt, der sich - bezogen auf den bestimmungsgemäß in die Kraftfahrzeugtür eingebauten Zustand des Türmoduls - zumindest mit einer Richtungskomponente entlang der Fahrzeuglängsachse erstreckt. Der Kanal weist eine entlang seiner Erstreckungsrichtung verlaufende Einführöffnung auf. Das mindestens eine Funktionselement kreuzt den Kanal und dadurch auch dessen längserstreckte Einführöffnung und verdeckt die Einführöffnung somit zumindest teilweise. Über die Einführöffnung kann ein Verstärkungselement der Kraftfahrzeugtür in den Kanal eingeführt werden.

Dass der Modulträger zu einem wesentlichen Teil durch Organoblech gebildet ist, bedeutet dabei, dass das Organoblech denjenigen Teil des Modulträgers bildet, der den Großteil der unter normalen Betriebsbedingungen auftretenden Kräfte erfährt. Hierbei kann es sich insbesondere um den Teil des Modulträgers handeln, an dem eine oder mehrere Führungsschienen eines Fensterhebers vorgesehen sind. Ein (z.B. eine oder mehrere Führungsschienen tragender, zusammenhängender) Teil des Modulträgers aus Organoblech oder mehrere (z.B. eine oder mehrere Führungsschienen tragende) Teile des Modulträgers aus Organoblech erstrecken sich beispielsweise über etwa 30% oder mehr der Fläche des Modulträgers. Insbesondere kann sich das Organoblech über mehr als 40% und in der Regel über mindestens 50% der Fläche des Modulträgers erstrecken, so dass das Organoblech damit auch einen entsprechenden Anteil von mehr als 40% oder etwa 50% oder mehr der Oberfläche des Modulträgers bildet. Um die Festigkeitsvorteile des Organoblechs voll zu nutzen, wird man in der Regel versuchen, den Anteil des Organoblechs an der Fläche des Modulträgers zu maximieren. Eine mehrteilige Ausbildung des Organoblechs an einem Modulträger ist hierbei nicht ausgeschlossen.

Ein Hauptbestandteil des Modulträgers ist beispielsweise ein plattenförmiges Halbzeug, welches aus einem Organoblech besteht. Bei Organoblech handelt es sich um einen endlosfaserverstärkten thermoplastischen Kunststoff, bei dem Endlosfasern in Form von Gelegen, Geweben oder Gestricken aus Glas-, Kevlar-, Kohle- oder Kunststofffasern in eine thermoplastische Matrix eingebettet werden. Als thermoplastischer Kunststoff für die Matrix eignet sich beispielsweise Polyamid aufgrund seiner guten Haftungseigenschaften zu den Fasern.

Unter der Bezeichnung endlosfaserverstärkt ist zu verstehen, dass die Länge der zur Verstärkung dienenden Fasern im Wesentlichen durch die Größe des plattenförmigen Organoblechs begrenzt ist. Innerhalb des Organoblechs ist eine Faser in der Regel nicht unterbrochen.

Somit bildet das Organoblech zwar einen Hauptbestandteil des Modulträgers, kann aber durch weitere Materialien ergänzt werden. So können beispielsweise metallene Elemente und/oder verschiedene Kunststoffelemente in das Organoblech eingearbeitet sein oder an dem Organoblech angebracht sein.

Aus der DE 100 52 739 A1 ist ein Modulträger bekannt, der eine Aussparung aufweist, in der ein Verstärkungselement aufnehmbar ist. Der Modulträger ist dabei starr ausgebildet. Das Verstärkungselement muss, um in der Aussparung aufgenommen zu werden, passgenau in diese eingeführt werden. Die Festlegung von Führungsschienen eines Kraftfahrzeugfensterhebers an dem Modulträger kann erst nach der Aufnahme des Verstärkungselements in der Aussparung erfolgen.

Aus der US2003/0188492 ist ein Modulträger bekannt, der einen elastisch deformierbaren Biegebereich aufweist.

Der Erfindung liegt das Problem zugrunde, ein Türmodul der eingangs genannten Art zu schaffen, bei dem die Aufnahme eines Verstärkungselements in dem Kanal erleichtert wird.

Dieses Problem wird erfindungsgemäß durch die Schaffung eines Türmoduls mit den Merkmalen des Anspruchs 1 gelöst.

Danach ist in dem Organoblech des Modulträgers ein elastisch deformierbarer Biegebereich ausgebildet, welcher ein zumindest abschnittsweises Aufbiegen des Kanals und/oder dessen Wegbiegen von dem Funktionselement ermöglicht. Dadurch kann die Einführöffnung des Kanals, zur Einführung des Verstärkungselements, zugänglich gemacht bzw. freigelegt werden. Der elastisch deformierbare Biegebereich ist rückfedernd ausgebildet, so dass elastische Rückstellkräfte ein Zurückfedern des Kanals ermöglichen, nachdem dieser zumindest abschnittsweise aus seiner Ausgansposition ausgelenkt wurde.

Somit muss ein jeweiliges Funktionselement, wie zum Beispiel eine oder mehrere Führungsschiene(n) des Kraftfahrzeugfensterhebers, nicht erst nachträglich an dem Modulträger festgelegt werden, um eine Aufnahme des Verstärkungselements in dem Kanal zu ermöglichen. Die Aufnahme des Verstärkungselements in dem Kanal des Modulträgers kann vielmehr auch dann erfolgen, wenn bereits wenigstens ein Funktionselement die Einführöffnung des Kanals zumindest teilweise überdeckt. Aufgrund der elastischen Rückstellkräfte können der elastisch deformierbare Biegebereich und/oder an den elastisch deformierbaren Biegebereich angrenzende Bereiche des Modulträgers nach einem Wegbiegen selbsttätig wieder eine Montageposition erreichen, die eine weiterführende Montage des Türmoduls zulässt.

In einer Ausführungsform ist der elastisch deformierbare Biegebereich derart ausgebildet, dass der Kanal beim Zurückfedern wieder seine ursprüngliche Ausgangsposition erreicht. Der Modulträger weist hierbei - bezogen auf den bestimmungsgemäß in die Kraftfahrzeugtür eingebauten Zustand des Türmoduls - im Querschnitt senkrecht zur Fahrzeuglängsachse vor der Auslenkung des Kanals und nach der Rückfederung dieselbe Kontur auf. Insbesondere kann der Modulträger vor und nach der Aufnahme des Verstärkungselements in dem Kanal jeweils dieselbe Kontur aufweisen.

In einer weiteren Ausführungsform ist der elastisch deformierbare Biegebereich derart ausgebildet, dass das Zurückfedern nur teilweise erfolgt, also die Montageposition ungleich der Ausgangsposition ist, aber gleichwohl derart, dass eine weiterführende Montage des Modulträgers bzw. des Türmoduls möglich ist.

Weiterhin kann der Modulträger mindestens eine Versteifung aufweisen, welche beispielsweise als versteifende Ausprägung in dem Organoblech ausgebildet ist oder als eine versteifende Struktur an dem Organoblech angeordnet ist und aus einem anderen Material als das Organoblech besteht. Derartige Versteifungen erstrecken sich vorteilhaft nicht in den elastisch deformierbaren Biegebereich.

Bei einer Weiterbildung sind der Biegebereich und gegebenenfalls auch daran angrenzende Bereiche mit einer homogenen Materialdicke und einem homogenen Materialaufbau ausgebildet.

Bei einer weiteren Ausgestaltung kann der Biegebereich mehrere Biegeteilbereiche aufweisen. Die Biegeteilbereiche können hierbei aneinander angrenzen oder auch durch Versteifungsbereiche voneinander getrennt sein. Dabei können die einzelnen Biegeteilbereiche jeweils eine unterschiedliche Elastizität bzw. Rückstellkraft aufweisen. Auch können Bereiche unterschiedlicher Elastizität ineinander übergehen; insbesondere können Bereiche ausgebildet sein, in denen sich die Elastizität kontinuierlich verändert.

Die Elastizität eines Biegebereichs bzw. eines Biegeteilbereiches kann beispielsweise durch den Wölbungsradius und/oder die Materialdicke des Organoblechs bestimmt sein. Hierdurch lässt sich auch die Rückstellkraft eines Biegebereichs bzw. eines Biegeteilbereiches beeinflussen.

Durch eine gezielte Wahl von Wölbungsradien und/oder der Materialdicke des Organoblechs kann die Amplitude und/oder Richtung der Auslenkung des Modulträgers aus seiner Ausgangsposition unter einer definierten Krafteinwirkung festgelegt werden.

In einer weiteren Ausführungsform kann der Biegebereich ein Teilstück der Begrenzungswand des Kanals und/oder Bereiche des Organoblechs außerhalb des Kanals umfassen. Weiterhin kann der Biegebereich auch die gesamte Begrenzungswand des Kanals enthalten.

Darüber hinaus kann die Begrenzungswand des Kanals wenigstens eine Verstärkungsleiste aufweisen. Die Verstärkungsleiste kann an dem Organoblech des Kanals angeordnet sein und dabei insbesondere an dem Organoblech selbst ausgeformt sein. Die Verstärkungsleiste erstreckt sich vorteilhaft entlang der Erstreckungsrichtung des Kanals. Insbesondere kann die Verstärkungsleiste als eine thermoplastische Anspritzung und/oder als Materialverdickung ausgebildet sein. Die Verstärkungsleiste ist geeignet, um Befestigungsstellen für an dem Modulträger festzulegende Elemente bereitzustellen.

In einer Weiterbildung umfasst der Biegebereich wenigstens einen Teilbereich der Begrenzungswand des Kanals, der nicht mit einer Verstärkungsleiste versehen ist. Weiterhin kann der Biegebereich wenigstens einen Bereich umfassen, der an den Kanal bzw. genauer an dessen Begrenzungswand angrenzt. Durch unterschiedlich ausgebildete Biegebereiche kann die Aufnahme des Verstärkungselements in dem Kanal gezielt vereinfacht werden.

Konkret kann das Verstärkungselement - bezogen auf den bestimmungsgemäß in die Kraftfahrzeugtür eingebauten Zustand des Türmoduls - in der Fahrzeugvertikalachse von oben zwischen dem Modulträger und dem Funktionselement in den Kanal einführbar sein. Hierfür kann der Kanal zumindest abschnittsweise von dem mindestens einen Funktionselement weg gebogen werden. Nach der Aufnahme des Verstärkungselements in dem Kanal kann der Modulträger aufgrund der elastischen Rückstellkräfte des Biegebereichs selbsttätig wieder eine Montageposition erreichen.

Insbesondere kann die Kontur des Kanals an die Kontur des einzufügenden Verstärkungselements angepasst sein. Etwaige hierfür erforderliche Umlenkungen der Begrenzungswand des Kanals unterschreiten hierbei vorteilhaft einen minimalen vorgegebenen Umlenkradius nicht.

In einer weiteren Ausführungsvariante ist der Modulträger im Bereich seiner umlaufenden Kontur mit wenigstens einem Dichtungselement versehen. Das Dichtungselement weist dabei zumindest abschnittsweise eine Gleitfähigkeit auf, die ein Entlanggleiten des Modulträgers an weiteren Bauteilen der Kraftfahrzeugtür, insbesondere an dem Verstärkungselement und/oder einer Türstruktur, ermöglicht. Dies erleichtert die Aufnahme des Verstärkungselements in dem Kanal und insbesondere die Montage des Türmoduls an der Türstruktur.

In einer Weiterbildung weist der Modulträger im Bereich von Verbindungsschnittstellen, zur Verbindung des Modulträgers mit dem Verstärkungselement, erhabene Auflagestellen auf (um die Verbindung des Modulträgers mit dem Verstärkungselement zu vereinfachen).

Gemäß einer Ausgestaltung des Türmoduls ist das Verstärkungselement einerseits in dem Kanal aufgenommen und andererseits mit dem Modulträger verbunden. Der Modulträger und das Verstärkungselement können dann eine vormontierte Einheit bilden. Hierdurch kann der Modulträger bei der Montage an der Türstruktur einer Kraftfahrzeugtür bereits das Verstärkungselement in seinem Kanal aufgenommen haben. D.h., die Verbindung des Modulträgers mit dem Verstärkungselement erfolgt vor der Montage des Modulträgers an der Türstruktur.

Nach einem weiteren Erfindungsaspekt betrifft die Erfindung eine Kraftfahrzeugtür mit einer Türstruktur und mit einem erfindungsgemäß ausgestalteten Türmodul, welches an der Türstruktur festgelegt ist. Dabei kann an der Türstruktur zudem das Verstärkungselement festgelegt sein, welches in dem Kanal des Türmoduls aufgenommen wird.

Gemäß einer Ausführungsform der Fahrzeugtür ist ein Spalt zwischen dem Modulträger und dem wenigstens einen, an dem Modulträger festgelegten Funktionselement vorhanden, welches die Einführöffnung des Kanals (zumindest teilweise) überdeckt. Bei dem Funktionselement kann es sich insbesondere um eine Führungsschiene eines Kraftfahrzeugfensterhebers handeln. Der Spalt befindet sich - bezogen auf den bestimmungsgemäß in die Kraftfahrzeugtür eingebauten Zustand des Türmoduls - entlang der Fahrzeugvertikalachse oberhalb des Kanals. Die Ausdehnung des Spaltes entlang der Fahrzeugquerachse ist dabei kleiner als die Ausdehnung des Verstärkungselementes entlang der Fahrzeugquerachse. Somit ist eine Aufnahme des Verstärkungselements in dem Kanal nur durch eine Einwirkung auf das Türmodul, insbesondere durch eine mechanische Einwirkung möglich. Beispielsweise muss der Spalt aufgeweitet werden, bis das Verstärkungselement in den Kanal einführbar ist. Dies wird ermöglicht aufgrund des elastisch deformierbaren Biegebereichs, welcher in dem Modulträger ausgebildet ist.

Das Verstärkungselement kann als geschlossenes Profilelement, insbesondere als Rohr, oder als offenes Profilelement ausgebildet sein.

Des Weiteren kann das Verstärkungselement durch ein Bauteil der Türstruktur gebildet sein. Dabei kann das Verstärkungselement mit einer Fensterrahmenstruktur und/oder einem Türkasten verbunden sein. Beispielsweise kann das Verstärkungselement als Blechprägeteil ausgebildet sein, dessen Enden mit einem Türinnenblech der Türstruktur verbunden sind. Andererseits kann das Verstärkungselement als einstückiges Bauteil des Türinnenblechs der Türstruktur ausgeführt sein.

Der Modulträger kann mit dem in dem Kanal des Türmoduls aufgenommen Verstärkungselement über eine Mehrzahl Verbindungsschnittstellen verbunden sein. Nach einer Ausführungsform ist vorgesehen, den Modulträger und das Verstärkungselement an Verbindungsschnittstellen durch Schraub-, Niet- und/oder Klebeverbindungen zu fügen.

Gemäß einem weiteren Aspekt betrifft die Erfindung ein Verfahren zur Verbindung eines erfindungsgemäßen Türmoduls mit einer Türstruktur einer Kraftfahrzeugtür, welches folgende Schritte umfasst:
- Positionierung des Türmoduls an der Türstruktur, wobei ein oberer Kopf mindestens einer am Modulträger angeordneten Führungsschiene eines Kraftfahrzeugfensterhebers entlang der Fahrzeugvertikalachse unterhalb zumindest der oberen Kontur des an der Türstruktur vorgesehenen Verstärkungselements angeordnet ist (und dabei z.B. an der unteren Kontur des Verstärkungslementes anliegt) und der Modulträger vorteilhaft zumindest abschnittsweise entlang der Fahrzeugquerachse an dem Verstärkungselement anliegt,
- Verschieben des Modulträgers entlang der Fahrzeugvertikalachse nach oben, wodurch ein Spalt zwischen Modulträger und Führungsschiene verbreitert wird und das Verstärkungselement durch die Einführöffnung in den Kanal des Modulträgers eingeführt wird,
- Wegnehmen äußerer Krafteinflüsse, sodass der Modulträger in eine Montageposition zurückfedert, die eine weitere Montage des Türmoduls ermöglicht, und
- Verbinden des Türmoduls mit der Türstruktur.

Gemäß einer Ausführungsform jenes Verfahrens stellt die Wegnahme der äußeren Krafteinflüsse keinen separaten Verfahrensschritt dar. Vielmehr liegen schon dadurch keine äußeren Krafteinflüsse mehr vor, dass das Verstärkungselement bestimmungsgemäß in den Kanal eingefügt worden ist.

Weitere Vorteile und Einzelheiten der Erfindung werden bei der nachfolgenden Beschreibung von Ausführungsbeispielen anhand der Figuren deutlich werden.

Es zeigen:
- Figur 1A: die Innenseite einer Türstruktur eines Kraftfahrzeugs und eines Modulträgers eines zugehörigen Türmoduls;
- Figur 1B: die Außenseite der Anordnung aus Figur 1A, wobei an dem Modulträger zusätzliche Funktionselemente festgelegt sind;
- Figur 2: eine vergrößerte Darstellung der Außenseite des Türmoduls aus Figur 1B;
- Figuren 3A bis 3C: Schritte beim Zusammenbau der Türstruktur und des Türmoduls aus den Figuren 1A, 1B und 2 im Querschnitt, wobei ein Verstärkungselement der Türstruktur in einem Kanal des Türmoduls aufgenommen wird;
- Figur 4: die Außenseite des Türmoduls gemäß Figur 2 und zusätzlich das Verstärkungselement aus den Figuren 3A bis 3C vor und nach der Aufnahme in dem Kanal;
- Figur 4A: eine perspektivische Ansicht eines Ausführungsbeispiels eines Modulträgers und insbesondere eines Biegebereichs des Modulträgers;
- Figur 4B und 4C: Querschnittdarstellungen weiterer Ausführungsbeispiele eines Modulträgers und insbesondere eines jeweiligen Biegebereiches;
- Figur 5A: die Innenseite einer Türstruktur und eines bestimmungsgemäß an der Türstruktur festgelegten Türmoduls, in Anlehnung an Figur 1A;
- Figur 5B: die Außenseite der Anordnung aus Figur 5A mit zusätzlichen, an dem Modulträger festgelegten Funktionselementen, in Anlehnung an Figur 1B;
- Figur 6A: die Innenseite des Türmoduls aus Figur 1A, wobei eine thermoplastische Umspritzung und mehrere thermoplastische Anspritzungen hervorgehoben dargestellt sind;
- Figur 6B: die Außenseite des Türmoduls aus Figur 6A, wobei auch hier die Umspritzung und die Anspritzungen hervorgehoben dargestellt sind;
- Figuren 7A und 7B: je eine vergrößerte Darstellung der Außenseite und der Innenseite eines Bereiches des Türmoduls aus den Figuren 6A und 6B, in welchem eine Anspritzung zur Festlegung eines Türzuziehgriffs angeordnet ist;
- Figuren 8A und 8B: je eine vergrößerte Darstellung der Innenseite und der Außenseite eines Bereiches des Türmoduls aus den Figuren 6A und 6B, in welchem eine Anspritzung zur Festlegung eines Lautsprechers angeordnet ist;
- Figur 9A: die Innenseite eines Türmoduls, in Anlehnung an die Figuren 1A, 5A und 6A, wobei zusätzlich ein Fensterhaberantrieb an dem Modulträger festgelegt ist;
- Figur 9B: eine vergrößerte Darstellung eines Bereichs des Türmoduls aus Figur 9A, ohne den Fensterheberantrieb;
- Figur 10: die Innenseite einer Variante der in Figur 9A dargestellten Ausführungsform eines Türmoduls.

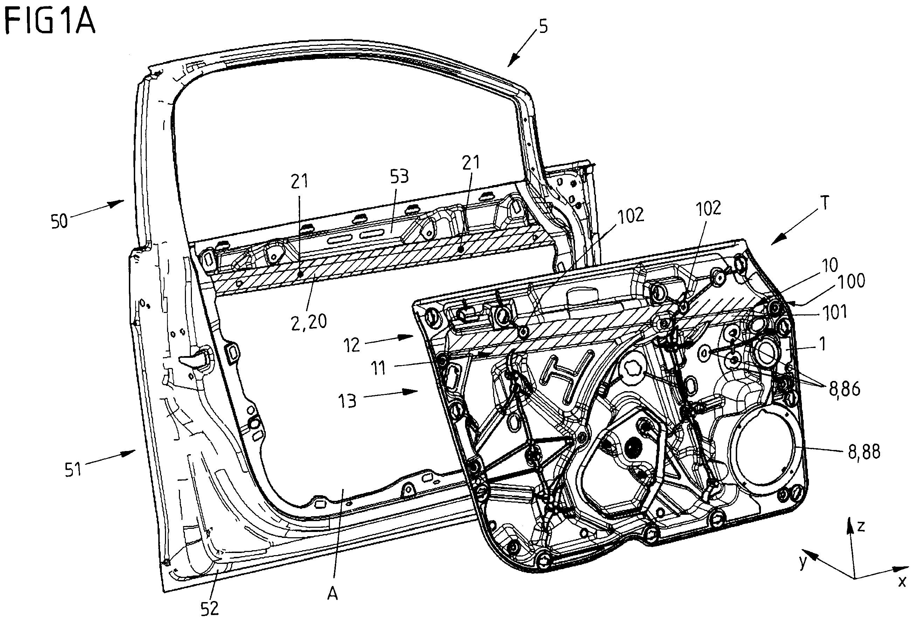

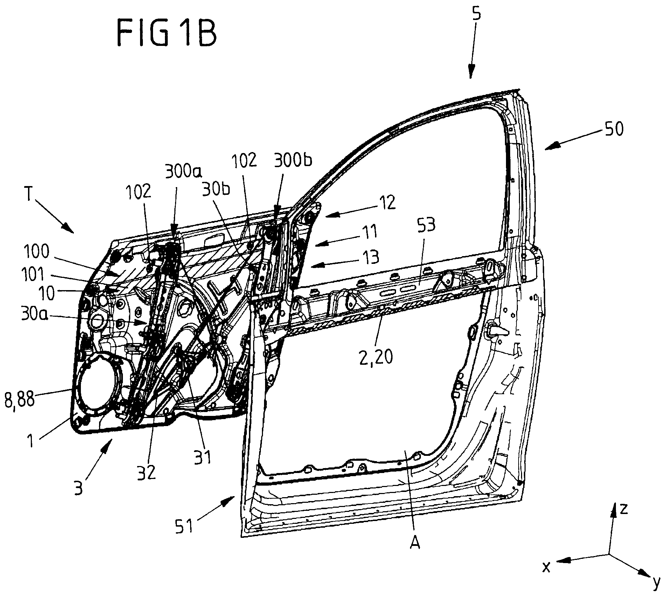

In den Figuren 1A und 1B sind wesentliche Elemente einer Kraftfahrzeugtür dargestellt, darunter ein Türmodul T und eine Türstruktur 5. Das Türmodul T ist dazu ausgebildet, an der Türstruktur 5 festgelegt zu werden. Das Türmodul T umfasst hierbei einen Modulträger 1, an welchem Funktionselemente des Türmoduls T montiert werden können, und zwar insbesondere bevor das Türmodul T an der Türstruktur 5 festgelegt worden ist, wie in den Figuren 1A und 1B gezeigt.

Bei einem bestimmungsgemäßen Einbau einer Kraftfahrzeugtür in ein Kraftfahrzeug weist erstere - ebenso wie die Türstruktur 5 und das Türmodul T als Komponenten der Kraftfahrzeugtür - eine Innenseite und eine Außenseite auf. Die Innenseite ist dem Innenraum des Kraftfahrzeugs zugewandt und die Außenseite einem Bereich außerhalb des Kraftfahrzeugs.

Des Weiteren kann - bezogen auf den bestimmungsgemäßen Einbau der Kraftfahrzeugtür in das Kraftfahrzeug - ein Koordinatensystem für die Kraftfahrzeugtür und deren Elemente definiert werden. Die Fahrzeuglängsachse x erstreckt sich hierbei von einer Rückseite des Kraftfahrzeugs zu dessen Vorderseite, also entlang der Vorwärtsfahrtrichtung. Die (horizontale) Fahrzeugquerachse y erstreckt sich senkrecht zu der Fahrzeuglängsachse x zwischen zwei gegenüberliegenden Kraftfahrzeugtüren des Kraftfahrzeugs. Die Fahrzeugvertikalachse z ist dadurch definiert, dass sie sowohl senkrecht auf der Fahrzeuglängsachse x als auch auf der Fahrzeugquerachse y steht. Die Fahrzeugvertikalachse z erstreckt sich vom Boden des Kraftfahrzeugs zu dessen Dach hin.

In Figur 1A sind vorliegend die Innenseiten der Türstruktur 5 und des Türmoduls T dargestellt; und in Figur 1B ist die Außenseite der Anordnung aus Figur 1A gezeigt, jedoch mit zusätzlichen Funktionselementen, die in Figur 1A nicht erkennbar sind.

Die Türstruktur 5 umfasst eine Fensterrahmenstruktur 50 und einen Türkasten 51. Die Fensterrahmenstruktur 50 und der Türkasten 51 sind in der hier dargestellten Ausführungsform durch ein Türinnenblech 52 gebildet. Alternativ können sie beispielsweise durch ein Kunststoffelement oder ein Kompositmaterial gebildet sein.

Eine Brüstungsbegrenzung 53 trennt die Fensterrahmenstruktur 50 von dem Türkasten 51. Die Brüstungsbegrenzung 53 erstreckt sich entlang der Fahrzeuglängsachse x zwischen der Vorderseite und der Hinterseite der Türstruktur 5. Die Brüstungsbegrenzung 53 kann beispielsweise als Blechprägeteil ausgebildet sein.

Der Türkasten 51 und die Brüstungsbegrenzung 53 umgeben eine Aussparung A in der Türstruktur 5. Bei einer bestimmungsgemäßen Festlegung des Türmoduls T an der Türstruktur 5 wird die Aussparung A von dem Türmodul T verdeckt. Dadurch trennt das Türmodul T zusammen mit der Türstruktur 5 in bekannter Weise einen Nassraum von einem Trockenraum der Kraftfahrzeugtür.

Der Trockenraum liegt vor der Innenseite des Türmoduls T und der Nassraum liegt vor der Außenseite des Türmoduls T. Im Bereich des Nassraums werden insbesondere Elemente einer Kraftfahrzeugtür angeordnet, welche nicht feuchtigkeitsempfindlich sind. Und im Bereich des Trockenraums werden insbesondere Elemente einer Kraftfahrzeugtür angeordnet, welche feuchtigkeitsempfindlich sind.

Die Türstruktur 5 umfasst des Weiteren ein Verstärkungselement 2. Vorliegend handelt es sich hierbei um ein geradliniges Rohr 20. Alternativ kann das Verstärkungselement 2 beispielsweise als Blechprägeteil, als offenes Profilelement oder als einstückiger Bestandteil des Türinnenblechs 52 ausgebildet sein.

Das Verstärkungselement 2 (in Form des Rohres 20) erstreckt sich im Wesentlichen entlang der Fahrzeuglängsachse x an der Türstruktur 5. Es ist entlang der Fahrzeugvertikalachse z unterhalb der Fensterrahmenstruktur 50 angeordnet; und es grenzt hierbei zumindest teilweise an die Brüstungsbegrenzung 53 an. Entlang der Fahrzeugquerachse y ist das Verstärkungselement 2 auf der Innenseite der Türstruktur 5 der Brüstungsbegrenzung 53 zumindest abschnittsweise vorgelagert. Auf der Außenseite der Türstruktur 5 ist daher nur ein unterer Rand des Verstärkungselements 2 sichtbar, da es größtenteils von der Brüstungsbegrenzung 53 verdeckt wird.

Das Verstärkungselement 2 kann in weiteren Ausführungsformen von einem geradlinigen Verlauf entlang seiner Erstreckungsrichtung abweichen. Das Verstärkungselement 2 kann beispielsweise einen gekrümmten Verlauf entlang seiner Erstreckungsrichtung aufweisen.

Das Verstärkungselement 2 weist Verbindungsschnittstellen 21 auf, die zur Festlegung des Modulträgers 1 an dem Verstärkungselement 2 ausgebildet sind. Die hier dargestellte Ausführungsform des Verstärkungselements 2 weist konkret zwei Verbindungsschnittstellen 21 auf, welche entlang der Fahrzeuglängsachse x voneinander beabstandet sind.

Der Modulträger 1 des Türmoduls T ist zu einem wesentlichen Teil durch Organoblech gebildet. Das Organoblech bildet also einen Hauptbestandteil des Modulträgers 1. Der Modulträger 1 erstreckt sich dabei im Wesentlichen entlang der x-z-Ebene (als Hauptebene des Türmoduls T).

Als Organoblech wird hier ein plattenförmiges Halbzeug aus einem endlosfaserverstärkten thermoplastischen Kunststoff bezeichnet, bei dem Endlosfasern in Form von Gelegen, Geweben oder Gestricken aus Glas-, Kevlar-, Kohle- oder Kunststofffasern in eine thermoplastische Matrix eingebettet sind. Als thermoplastischer Kunststoff für die Matrix eignet sich Beispielsweise Polyamid aufgrund seiner guten Haftungseigenschaften zu den Fasern.

Unter der Bezeichnung endlosfaserverstärkt ist zu verstehen, dass die Länge der zur Verstärkung dienenden Fasern im Wesentlichen durch die Größe des plattenförmigen Organoblechs begrenzt ist. Innerhalb des Organoblechs ist eine Faser in der Regel nicht unterbrochen.

Das Organoblech des Modulträgers 1 ist von einem äußeren Rand 15 umgeben. Der äußere Rand 15 ist mit einer thermoplastischen Umspritzung 7 eingehüllt. D.h., der äußere Rand 15 wird von der Umspritzung 15 im Querschnitt umgriffen. Durch die Umspritzung 7 kann insbesondere ein Dichtungselement 14 gebildet sein. Die Umspritzung 7 kann aber auch eine Dichtungsaufnahme bilden, in welcher ein Dichtungselement aufgenommen werden kann. Das Dichtungselement 14 ist z.B. an der oberen Kante des Modulträgers 1 angeordnet und erstreckt sich dort entlang der Fahrzeuglängsachse x. Das Dichtungselement 14 weist vorteilhaft Gleiteigenschaften auf, welche ein Entlanggleiten des Modulträgers 1 an weiteren Elementen einer Kraftfahrzeugtür erleichtern.

Der Modulträger 1 umfasst ferner Schnittstellen für an dem Modulträger 1 festzulegende Funktionselemente, wie z.B.: Verstärkungselemente, Versteifungselemente, Dichtungselemente, Schalldämmwände, Elemente eines Kraftfahrzeugfensterhebers, Elemente einer Türstruktur, ein Türsteuergerät, einen Türzuziehgriff, Lautsprecher, eine Türinnenverkleidung, ein Türinnenblech und/oder ein Türaußenblech.

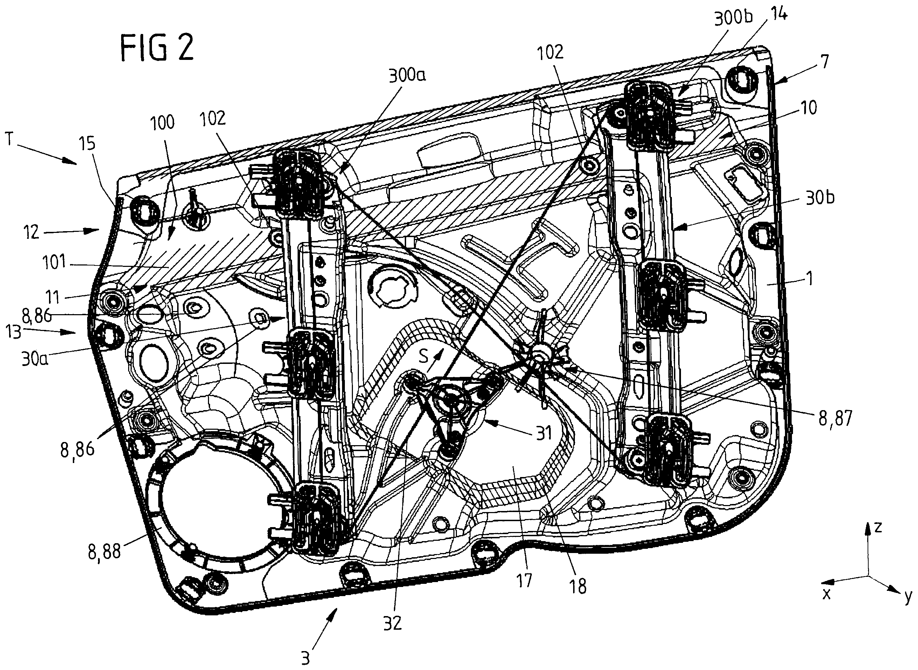

An der in den Figuren 1B und 2 dargestellten Außenseite des Türmoduls T sind insbesondere Elemente eines Kraftfahrzeugfensterhebers 3 an dem Modulträger 1 festgelegt. Dazu gehören zwei Führungsschienen 30a und 30b, ein Fensterheberantrieb 31 sowie ein flexibles Zugmittel 32, welches mit dem Fensterheberantrieb 31 gekoppelt ist. Die Führungsschienen 30a und 30b erstrecken sich im Wesentlichen entlang der Fahrzeugvertikalachse z und sind entlang der Fahrzeuglängsachse x voneinander beabstandet.

Die Führungsschienen 30a, 30b erstrecken sich entlang der Fahrzeugvertikalachse z nahezu entlang der gesamten Ausdehnung des Modulträgers 1. Hierbei kreuzen sie einen längserstreckten Kanal 10, welcher in dem Organoblech des Modulträgers 1 einstückig ausgeformt ist. In weiteren Ausführungsformen kann beispielsweise auch nur eine Führungsschiene 30a, 30b den Kanal 10 kreuzen. Die Führungsschienen 30a und 30b weisen jeweils einen Kopf 300a und 300b auf, der, entlang der Fahrzeugvertikalachse z, oberhalb des Kanals 10 angeordnet ist.

Zwischen den beiden Führungsschienen 30a und 30b ist ein Fensterheberantrieb 31 angeordnet und mit dem flexiblen Zugmittel 32 gekoppelt. Dadurch wird lokal eine Erstreckungsrichtung s eines vom Fensterheberantrieb 31 abgehenden Abschnittes des flexiblen Zugmittels 32 definiert. Das flexible Zugmittel 32 kann beispielsweise als Seil ausgeführt sein.

Der Fensterheberantrieb 31 ist in einem Anbindungsbereich 17 des Organoblechs des Modulträgers 1 angeordnet. Der Anbindungsbereich 17 ist von einer Ausprägung 18 des Organoblechs des Modulträgers 1 umgeben.

Der von den Führungsschienen 30a, 30b gekreuzte Kanal 10 erstreckt sich (im Wesentlichen geradlinig) entlang der Fahrzeuglängsachse x (und nahezu entlang der kompletten Ausdehnung des Modulträgers 1). Entlang der Fahrzeugvertikalachse z betrachtet ist der Kanal 10 im oberen Drittel des Modulträgers 1 angeordnet.

Der Kanal 10 ist hierbei so ausgebildet, dass er das zugehörige Verstärkungselement 2 aufnehmen kann. Hierzu sind die Form und Erstreckungsrichtung des Kanals 10 einerseits und des Verstärkungselements 2 andererseits aneinander angepasst. Ebenso wie das Verstärkungselement 2 kann in weiteren Ausführungsformen der Kanal 10 von einem geradlinigen Verlauf abweichen. Er kann beispielsweise einen kurvigen Verlauf entlang seiner Erstreckungsrichtung haben.

Der Kanal 10 weist eine Einführöffnung 100 auf, die sich vorliegend auf der Außenseite des Modulträgers 1 befindet. Die Einführöffnung 100 verläuft entlang der Erstreckungsrichtung des Kanals 10, z.B. über seine gesamte Ausdehnung. Die Einführöffnung 100 ist dazu ausgebildet, die Einführung des Verstärkungselements 2 in den Kanal 10, zur Aufnahme des Verstärkungselements in dem Kanal 10, zu ermöglichen.

Die Einführöffnung 100 wird von den beiden Führungsschienen 30a, 30b derart gekreuzt, dass diese die Einführöffnung 100 zumindest teilweise verdecken. In weiteren Ausführungsformen kann auch nur eine Führungsschiene 30a, 30b die Einführöffnung 100 (teilweise) verdecken.

Die Begrenzungswand 101 des Kanals wölbt sich vorliegend entlang der Fahrzeugquerachse y von der Hauptebene des Türmoduls T weg, und damit auch weg von der Außenseite des Modulträgers 1.

In dem Kanal 10 sind außerdem zwei Verbindungsschnittstellen 102 angeordnet, die zur Festlegung des Modulträgers 1 an dem Verstärkungselement 2 dienen. Bei einer bestimmungsgemäßen Festlegung des Modulträgers 1 an der Türstruktur 5 überlagern sich die Verbindungsschnittstellen 102 des Modulträgers 1 mit den Verbindungsschnittstellen 21 des Verstärkungselements 2.

Da die Einführöffnung 100 des Kanals 10 von wenigstens einer Führungsschiene 30a, 30b zumindest teilweise verdeckt ist, wird die Aufnahme des Verstärkungselements 2 in dem Kanal 10 vorliegend dadurch ermöglicht, dass das Organoblech des Modulträgers 1 des Türmoduls T einen elastisch deformierbaren Biegebereich 11 aufweist. Bei der hier dargestellten Ausführungsform ist der Biegebereich 11 in dem Kanal 10 ausgebildet. Die Begrenzungswand 101 umfasst den Biegebereich 11. In weiteren Ausführungsformen kann der Biegebereich 11 auch außerhalb des Kanals 10, insbesondere unterhalb des Kanals 10, angeordnet sein.

Der Biegebereich 11 erstreckt sich (nahezu über die komplette Ausdehnung des Modulträgers 1) entlang der Fahrzeuglängsachse x. Der Biegebereich 11 erstreckt sich dabei vorliegend wenigstens über die kompletten Ausdehnung des Kanals 10 entlang der Fahrzeuglängsachse x.

Durch den Biegebereich 11 werden zwei weitere Bereiche 12, 13 in dem Organoblech des Modulträgers 1 definiert. Entlang der Fahrzeugvertikalachse z befindet sich der eine Bereich 12 oberhalb des Biegebereichs 11 und der andere Bereich 13, welcher im Ausführungsbeispiel um ein Vielfaches größer ist als der eine Bereich 12, befindet sich unterhalb des Biegebereichs 11.

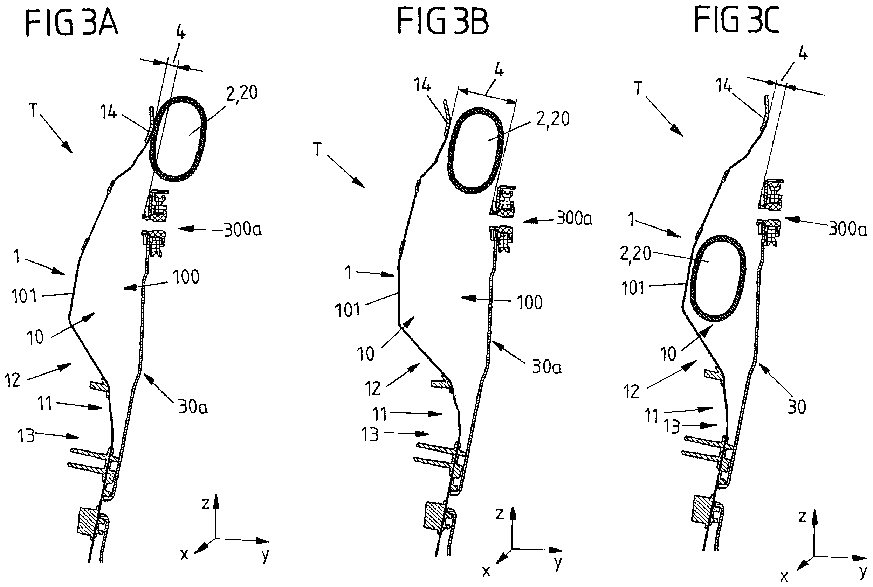

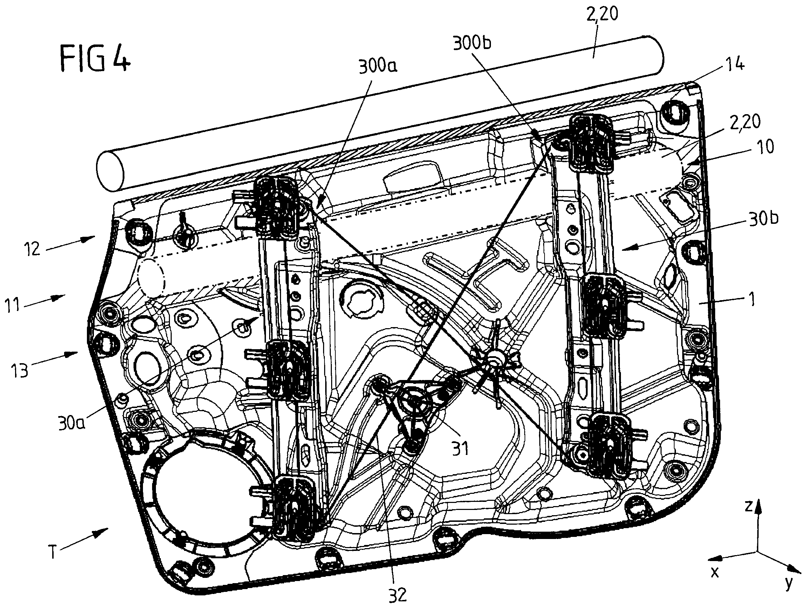

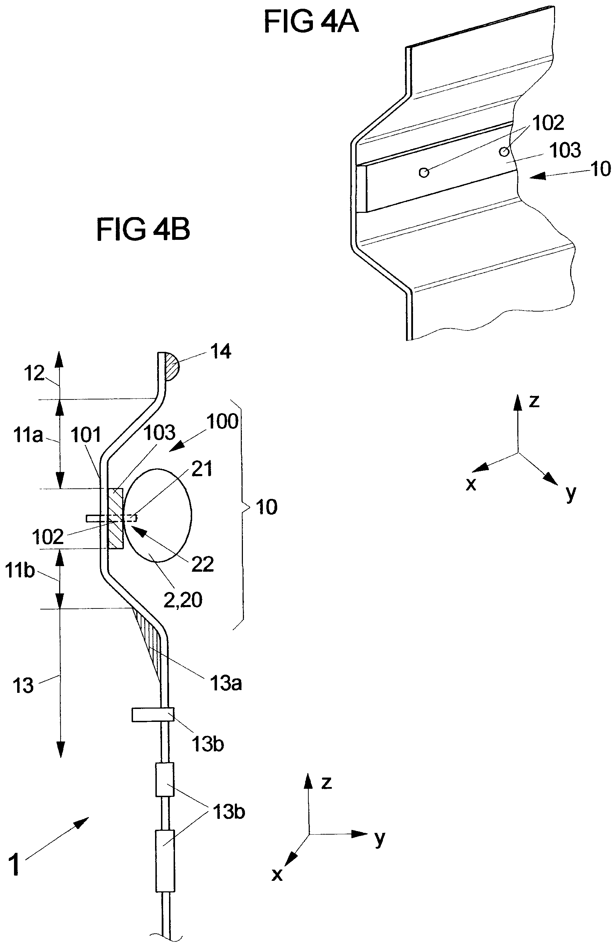

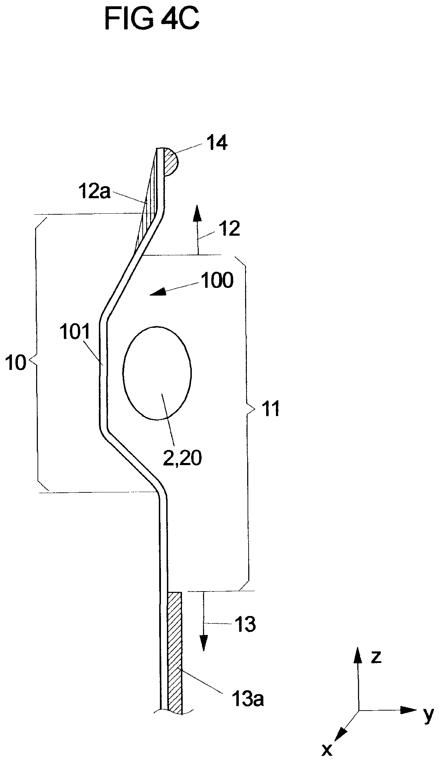

Der Biegebereich 11 ermöglicht ein Wegbiegen des einen Bereiches 12 des Organoblechs des Modulträgers 1, entgegen der Fahrzeugquerachse y, von den Führungsschienen 30a, 30b weg. Hierdurch kann die Einführöffnung 100 des Kanals 10 zumindest teilweise freigelegt werden, um das Verstärkungselement 2 in dem Kanal 10 aufzunehmen. Im Zusammenhang mit den Figuren 3A bis 3C und der Figur 4 ist dies noch einmal im Detail erläutert.

Des Weiteren sind thermoplastische Anspritzungen 8 an dem Modulträger 1 angeordnet. Die Anspritzungen 8 können beispielsweise Aussparungen in dem Modulträger 1 zumindest teilweise ausfüllen. Die Aussparungen und die zugehörigen Anspritzungen 8 definieren dabei Schnittstellen zur Festlegung von Funktionselementen. Dies wird nachfolgend anhand konkreter Anspritzungen näher erläutert werden, welchen die Bezugszeichen 81 bis 89 als nähere Spezifizierung des allgemeinen Bezugszeichens "8" zugeordnet sind. Dies ist auch in den Figuren für einige Bezugszeichen beispielhaft illustriert.

Die Begriffe "thermoplatische Anspritzung" und "thermoplastische Umspritzung" sollen dabei jeweils darauf hinweisen, dass die entsprechende An- bzw. Umspritzung aus einem thermoplastischen Material, insbesondere einem thermoplastischen Kunststoff, hergestellt ist. Jenes Material kann dabei verschieden von dem Material des Organoblechs sein. Vorliegend werden hierfür auch die Begriffe "Anspritzung" und "Umspritzung" ohne den Zusatz "thermoplastisch" verwendet.

Beispielsweise ist eine Anspritzung 88 zur Festlegung eines Lautsprechers im unteren, vorderen Bereich des Modulträgers 1 erkenntlich. Mittig im vorderen Bereich des Modulträgers 1 sind Anspritzungen 86 angeordnet, welche zur Festlegung eines Türsteuergerätes ausgebildet sind. Eine weitere Anspritzung 87, zur Festlegung eines Türzuziehgriffs, ist teilweise zwischen den Führungsschienen 30a, 30b, hinter dem Fensterheberantrieb 31, vorgesehen.

In den Figuren 3A bis 3C ist dargestellt, wie das Verstärkungselement 2 mit dem Türmodul T verbunden wird und hierfür in den Kanal 10 des Modulträgers 1 eingeführt wird. Die Figuren zeigen das Türmodul T aus den Figuren 1B und 2 sowie das als Rohr 20 ausgebildete Verstärkungselement 2, welches sich entlang der Fahrzeuglängsachse x erstreckt, im Querschnitt. Der Querschnitt ist entlang der Fahrzeuglängsachse x derart gewählt, dass der Modulträger 1 im Bereich der vorderen Führungsschiene 30a geschnitten wird, so dass sich die nachfolgenden Ausführungen zu den Figuren 3A bis 3C vor allem auf diese (vordere) Führungsschiene 30a beziehen, aber entsprechend auch für die andere (hintere) Führungsschiene 30b gelten.

In Figur 3A ist eine Situation vor der Aufnahme, in der Figur 3B eine Situationen während der Aufnahme und in Figur 3C ist eine Situation nach erfolgreicher Aufnahme des Verstärkungselements 2 in dem Kanal 10 gezeigt. In allen drei Figuren erstreckt sich die Fahrzeuglängsachse x aus der Bildebene heraus; d.h., die Innenseite des Türmoduls T ist in der Bildebene links angeordnet und die Außenseite des Türmoduls T ist in der Bildebene rechts angeordnet.

In Figur 3A ist das Türmodul T entlang der Fahrzeugvertikalachse z derart relativ zu dem Verstärkungselement 2 positioniert, dass sich der Kopf 300a der Führungsschiene 30a unterhalb des Verstärkungselements 2 befindet. Entlang der Fahrzeugquerachse y ist das Türmodul T derartig positioniert, dass das Dichtungselement 14 des Modulträgers 1 seitlich an dem Verstärkungselement 2 anliegt. Das Dichtungselement 14 ist in Kontakt mit der Innenseite des Verstärkungselements 2.

Zwischen dem Kopf 300a der Führungsschiene 30a und dem Dichtungselement 14 ist ein Spalt 4 ausgebildet. Dabei ist die Ausdehnung des Spaltes 4 kleiner als die Ausdehnung des Verstärkungselements 2. Daher kann das Verstärkungselement 2 nicht durch den Spalt 4 in die Einführöffnung 100 des Kanals 10 eingeführt werden. Um dennoch die Aufnahme des Verstärkungselements 2 in dem Kanal 10 zu ermöglichen, muss zunächst ein Einführen des Verstärkungselements 2 durch den Spalt 4 in die Einführöffnung 100 ermöglicht werden. Dies kann z.B. dadurch geschehen, dass der Spalt 4 aufgeweitet wird.

Eine Aufweitung des Spaltes 4 kann dadurch erreicht werden, dass eine Kraft im Wesentlichen entlang der Fahrzeugquerachse y auf den einen Bereich 12, oberhalb des Biegebereichs 11, ausgeübt wird. Beispielsweise kann die Kraft im Bereich des Dichtungselements 14 an dem Modulträger 1 angreifen. Unter der Wirkung einer solchen Kraft kann aufgrund der elastischen Deformierbarkeit des Biegebereichs 11 der Spalt 4 aufgeweitet werden. Konkret werden der eine Bereich 12, oberhalb des Biegebereichs 11, und somit auch insbesondere der Kanal 10 unter der Krafteinwirkung, von der Führungsschiene 30a weggebogen.

Die erforderliche Kraft kann dadurch auf den Modulträger 1 ausgeübt werden, dass das Türmodul T zum einen entlang der Fahrzeugquerachse y verschoben wird. Hierdurch drückt das Verstärkungselement 2 gegen das Dichtungselement 14. Dieser Bewegung wird ein Verschieben des Türmoduls T entlang der Fahrzeugvertikalachse z überlagert, bis der Kopf 300a der Führungsschiene 30a mit dem Rohr 20 in Berührung kommt.

Aufgrund der Bewegung entlang der Fahrzeugvertikalachse z gleitet das Dichtungselement 14 an dem Verstärkungselement 2 entlang. Gleichzeitig bewegt sich die Führungsschiene 30a entlang der Fahrzeugquerachse y zumindest teilweise von dem Modulträger 1 weg, da zumindest die Bewegung des einen Bereiches 12 des Modulträgers 1 entlang dieser Richtung von dem Verstärkungselement 2 verhindert wird.

Daher wird bei dieser Bewegung, aufgrund des elastisch deformierbaren Biegebereichs 11, der Kanal 10 zumindest teilweise von der Führungsschiene 30a weggebogen und der Spalt 4 aufgeweitet. Das Wegbiegen wird solange fortgesetzt, bis der Spalt 4 genügend aufgeweitet ist, um das Verstärkungselement 2 zwischen dem Modulträger 1 und der Führungsschiene 30a in die Einführöffnung 100 einzuführen. Sobald der Spalt 4 so hinreichend aufgeweitet worden ist, dass das Verstärkungselement 2 in die Einführöffnung 100 eingeführt werden kann, wird das Türmodul T weiter entlang der Fahrzeugvertikalachse z nach oben verschoben. Diese Situation ist in Figur 3B dargestellt.

Die Verschiebung des Türmoduls T entlang der Fahrzeugvertikalachse z wird fortgesetzt, bis das Verstärkungselement 2 in dem Kanal 10 aufgenommen ist. Da der Biegebereich 11 federelastisch ausgebildet ist, kehrt der eine Bereich 12, oberhalb des Biegebereichs 11, nach dem Ende der äußeren Krafteinwirkung wieder in seine Ausgangslage zurück.

Nach Beendigung der Krafteinwirkung verkleinert sich der Spalt 4 z.B. wieder so weit, bis er seine ursprüngliche Ausdehnung erreicht hat. Das Verstärkungselement 2 ist somit zwischen der Begrenzungswand 101 und der Führungsschiene 30a eingeschlossen. Dies ist in Figur 3C dargestellt.

In einer Weiterbildung kann der Modulträger 1 über seine Verbindungsschnittstellen 102 mit dem in dem Kanal 10 aufgenommenen Verstärkungselement 2 über dessen Verbindungsschnittstellen 21 verbunden werden.

In Figur 4 sind die Außenseite des Türmoduls T, entsprechend den Figuren 1B und 2, sowie das als Rohr 20 ausgebildete Verstärkungselement 2 dargestellt. Das Verstärkungselement 2 ist hierbei einmal vor der Aufnahme in dem Kanal 10 und einmal nach der Aufnahme in dem Kanal 10 zeichnerisch angedeutet. Vor der Aufnahme in den Kanal 10 ist das Verstärkungselement 2, entlang der Fahrzeugvertikalachse z, oberhalb des Türmoduls T angeordnet, wie mit durchgezogenen Linien dargestellt. Dies entspricht einer Situation, wie in Figur 3A gezeigt.

Der Zustand nach der Aufnahme des Verstärkungselementes 2 in dem Kanal 10 ist dadurch verdeutlicht, dass das Verstärkungselement 2 mit gestrichelten Linien dargestellt ist. Dies entspricht in etwa der in Figur 3C dargestellten Situation. Nach der Aufnahme des Verstärkungselements 2 in den Kanal 10 wird dieses in dem Kanal 10 auf der Außenseite des Türmoduls T von den beiden Führungsschienen 30a und 30b sowie von dem flexiblen Zugmittel 32 gekreuzt. Die beiden Köpfe 300a und 300b der Führungsschienen 30a und 30b sind dabei entlang der Fahrzeugvertikalachse z oberhalb des Verstärkungselements 2 angeordnet.

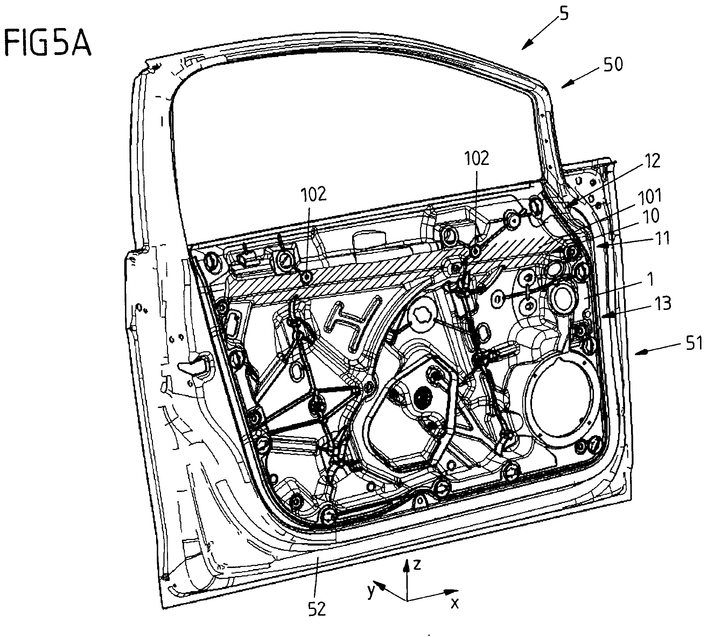

In den Figuren 4A bis 4C sind weitere Ausführungsbeispiele eines Modulträgers 1, insbesondere des Biegebereichs 11 dargestellt, welche Abwandlungen des Ausführungsbeispiels aus den Figuren 1A bis 4 illustrieren. Die darauf folgenden Figuren 5A bis 10 beziehen sich demgegenüber wieder auf das Ausführungsbeispiel der Figuren 1A bis 4.

In Figur 4A ist ein weiteres Ausführungsbeispiel eines Modulträgers 1 in einer perspektivischen Ansicht ausschnittsweise dargestellt. Der dargestellte Ausschnitt des Modulträgers 1 zeigt die Außenseite des Modulträgers 1 und beinhaltet den Kanal 10. Bei dem hier dargestellten Ausführungsbeispiel ist an dem Kanal 10 eine längserstreckte Verstärkungsleiste 103 angeordnet. Sie verläuft entlang der Erstreckungsrichtung des Kanals 10.

Die Verstärkungsleiste 103 kann beispielsweise als Anspritzung, insbesondere faserverstärkt, ausgebildet sein. Die Verstärkungsleiste 103 kann dabei stoff- und/oder formschlüssig mit dem Organoblech des Modulträgers 1 verbunden sein. Die Verstärkungsleiste 103 kann auch als Materialverdickung des Organoblechs in dem Kanal 10 ausgebildet sein. Bei dem hier dargestellten Ausführungsbeispiel umfasst die Verstärkungsleiste 103 Verbindungsschnittstellen 102 für das Verstärkungselement 2, das über seine Verbindungsschnittstellen 21 mit den Verbindungsschnittstellen 102 der Verstärkungsleiste 103 verbunden werden kann.

In Figur 4B ist eine Ausführungsform eines Modulträgers 1 mit an dem Kanal 10 angeordneter Verstärkungsleiste 103 in einem Querschnitt (senkrecht zur Fahrzeuglängsachse x) dargestellt. Die auf der Außenseite des Modulträgers 1 angeordnet Einführöffnung 100 des Kanals 10 befindet sich hierbei auf der rechten Bildseite. In dem Kanal 10 ist das (rohrförmige) Verstärkungselement 2 aufgenommen. Das Verstärkungselement 2 ist über seine Verbindungsschnittstellen 21 und die Verbindungsschnittstellen 102 der Verstärkungsleiste 103 durch Befestigungsmittel 22 mit der Verstärkungsleiste 103 verbunden.

Der elastisch deformierbare Biegebereich 11 des Modulträgers 1 weist im Ausführungsbeispiel zwei elastisch deformierbare Biegeteilbereiche 11a und 11b auf, welche durch die Verstärkungsleiste 103 voneinander getrennt sind. Der erste Biegeteilbereich 11a ist entlang der Fahrzeugvertikalachse z oberhalb der Verstärkungsleiste 103 angeordnet. Der erste Biegeteilbereich 11a grenzt an die Verstärkungsleiste 103 an und umfasst das Organoblech des Modulträgers 1 bis zu einem Dichtungselement 14. Das Dichtungselement 14 ist hierbei am äußeren Rand des Modulträgers 1, auf dessen Außenseite, angeordnet. Der zweite Biegeteilbereich 11b ist entlang der Fahrzeugvertikalachse z unterhalb der Verstärkungsleiste 103 angeordnet. Er umfasst das Organoblech des Modulträgers 1 bis zu einem ersten Versteifungsbereich 13a.

Der erste Versteifungsbereich 13a erstreckt sich auf der Innenseite des Modulträgers 1 zumindest teilweise in den Bereich des Organoblechs des Modulträgers, welcher den Kanal 10 ausbildet. Der erste Versteifungsbereich 13a ist als eine Versteifungsrippe ausgebildet, welche den Bereich unterhalb des Kanals 10 mit dem Bereich des Kanals 10 verbindet. Bei dem ersten Versteifungsbereich 13a kann es sich beispielsweise um eine Anspritzung handeln. Er erzeugt einen Schutzbereich für an dem Modulträger festgelegte Funktionselemente 13b, welche sich entlang der Fahrzeugvertikalachse z unterhalb des Versteifungsbereichs 13a befinden.

Die beiden Biegeteilbereiche 11a und 11b umfassen im Ergebnis Teilbereiche der Begrenzungswand 101 des Kanals 10. Insbesondere aufgrund von versteifenden Elementen, wie dem ersten Versteifungsbereich 13a und der Verstärkungsleiste 103, ist dabei aber nicht die gesamte Begrenzungswand 101 des Kanals 10 als Biegebereich 11 ausgebildet.

Das Wegbiegen und/oder Aufbiegen des Kanals 10 bezüglich eines Funktionselementes, welches hier nicht dargestellt ist, wird vor allem durch die elastisch deformierbaren Biegeteilbereiche 11a und 11b ermöglicht. Hierbei kann die Amplitude der Auslenkung des Modulträgers 1 bezüglich seine Ausgangsposition durch die Elastizität der beiden Biegeteilbereiche 11a und 11b mitbestimmt werden. Die Elastizitäten der beiden Biegeteilbereiche 11a und 11b können unterschiedlich ausfallen.

In Figur 4C ist eine weitere Ausführungsform eines Modulträgers 1, wiederum in einem Querschnitt senkrecht zu Fahrzeuglängsachse x, dargestellt. Bei dieser Ausführungsform ist keine Verstärkungsleiste 103 in dem Kanal 10 angeordnet.

Über die Einführöffnung 100 des Kanals 10 ist das Verstärkungselement 2, 20, welches rohrförmig ausgebildet ist, in dem Kanal 10 aufgenommen. In den Bereich des Kanals 10 erstreckt sich ein zweiter Versteifungsbereich 12a. Der zweite Versteifungsbereich 12a ist als eine Versteifungsrippe auf der Innenseite des Modulträgers 1 ausgebildet und erstreckt sich vorliegend, entlang der Fahrzeugvertikalachse z, von oben in den Bereich des Kanals 10. Der Versteifungsbereich 12a verbindet einen Bereich des Organoblechs oberhalb des Kanals 10 mit dem Bereich des Kanals 10.

Auf der Außenseite des Modulträgers 1 ist das Dichtungselement 14 an dem Organoblech des Modulträgers 1, entlang der Fahrzeugvertikalachse z, oberhalb des Kanals 10 angeordnet. Des Weiteren ist auf der Außenseite des Modulträgers 1 der erste Versteifungsbereich 13a an dem Organoblech des Modulträgers 1 angeordnet. Der erste Versteifungsbereich 13a ist hierbei, entlang der Fahrzeugvertikalachse z, von dem Bereich des Kanals 10 beabstandet.

Der elastisch deformierbare Biegebereich 11 umfasst bei dieser Anordnung nahezu den gesamten Bereich des Organoblechs des Modulträgers 1, welcher den Kanal 10 definiert, ausgenommen einen kleinen Bereich an der Oberseite des Kanals 10, in welchem der zweite Versteifungsbereich 12a am Organoblech des Modulträgers 1 angeordnet ist.

Zusätzlich umfasst der Biegebereich 11 einen Bereich des Organoblechs des Modulträgers 1, welcher entlang der Fahrzeugvertikalachse z unterhalb des Kanals 10 an diesen angrenzt und sich bis zu dem ersten Versteifungsbereich 13a erstreckt. Der Biegebereich 11 ist somit durch den ersten und zweiten Versteifungsbereich 13a und 12a begrenzt. Auch hier kann der Biegebereich 11 mehrere Biegeteilbereiche aufweisen, welche aneinander angrenzen und sich (lediglich) durch unterschiedliche Elastizitäten voneinander unterscheiden.

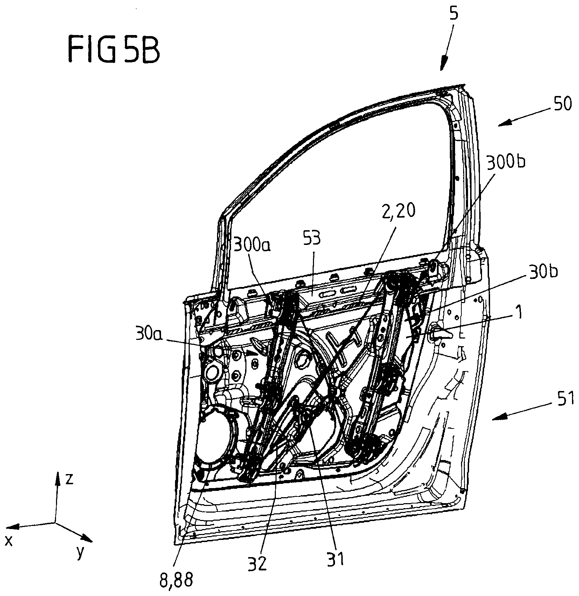

In den Figuren 5A und 5B sind erneut das Türmodul T und die Türstruktur 5 dargestellt, wobei das Türmodul T an der Türstruktur 5 festgelegt ist und somit die Aussparung A verdeckt. In Figur 5A ist die Innenseite der Türstruktur 5 und des Türmoduls T, analog zu der Figur 1A, dargestellt. Bei der Darstellung in der Figur 5B handelt es sich um die Darstellung der Außenseite der Türstruktur 5 und des Türmoduls T.

In dem zusammengebauten Zustand sind auf der Innenseite die Brüstungsbegrenzung 53 sowie das Verstärkungselement 2 nicht erkennbar, da sie vollständig von dem Türmodul T verdeckt sind. Auf der Außenseite sind demgegenüber die Brüstungsbegrenzung 53 und der untere Rand des Verstärkungselements 2 ersichtlich. In dem zusammengebauten Zustand sind die beiden Köpfe 300a und 300b der Führungsschienen 30a und 30b an der Brüstungsbegrenzung 53 festgelegt.

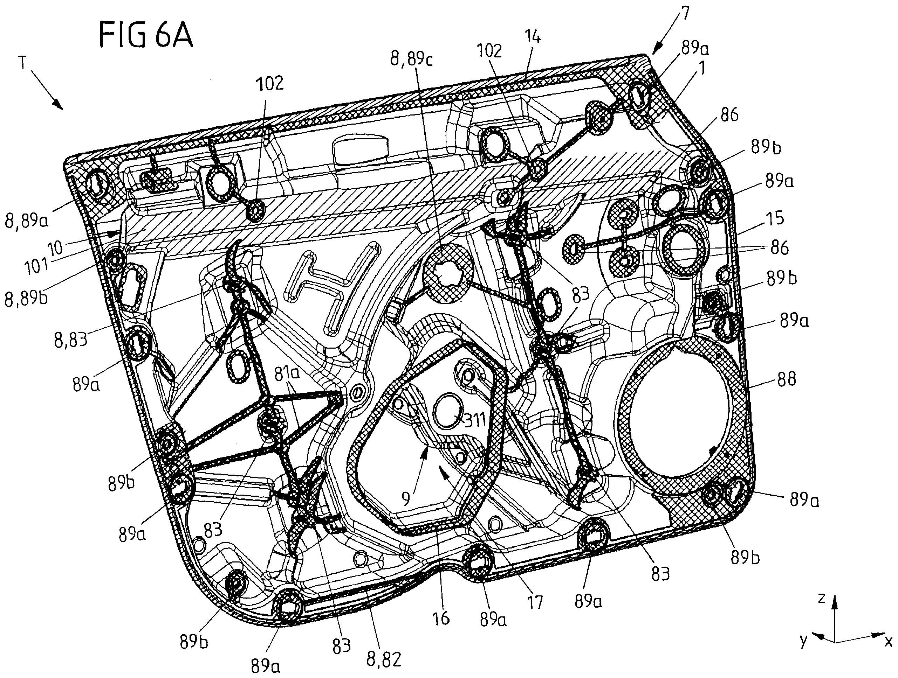

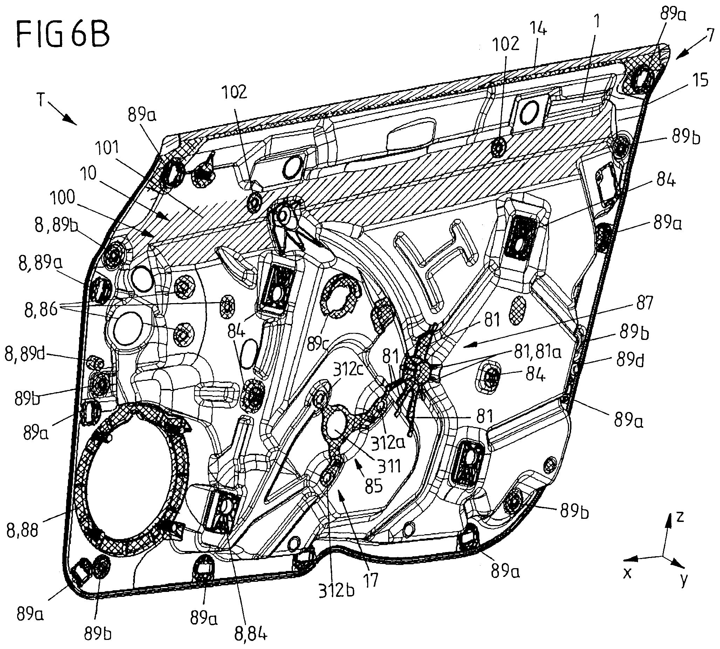

In den Figuren 6A und 6B ist der Modulträger 1 des Türmoduls T vergrößert dargestellt, um weitere Einzelheiten erkennbar zu machen. Die Innenseite ist in Figur 6A gezeigt und die Außenseite in Figur 6B. Insbesondere sind eine thermoplastische Umspritzung 7 sowie thermoplastischen Anspritzungen 8, welche auch thermoplastische Durchspritzungen umfassen können, durch Schraffuren hervorgehoben. Die Umspritzung 7 ist durch eine schräg verlaufende Schraffur gekennzeichnet und umfasst bzs. umgreift im Querschnitt den Rand des Modulträgers 1 zumindest abschnittsweise. Die Anspritzungen 8 sind durch eine Karomusterschraffur gekennzeichnet. Der Begriff thermoplastische An- bzw. Umspritzung weist dabei darauf hin, dass die entsprechende An- oder Umspritzung durch Spritzgießen aus einem thermoplastischen und daher für den Spritzgussvorgang in einen spritzfähigen (z.B. zähflüssigen) Zustand bringbaren Material hergestellt ist.

Die Anspritzungen 8 können direkt an dem Organoblech angebracht sein, in dem Organoblech ausgebildete Aussparungen zumindest teilweise ausfüllen und/oder als Durchspritzungen des Organoblechs ausgeführt sein.

Bei einer Umspritzung 7 wird ein Teil des Organoblechs des Modulträgers 1, insbesondere an dessen äußerem Rand, im Querschnitt zumindest teilweise durch ein thermoplastisches Material umfasst. Bei einer Anspritzung 8 wird ein thermoplastisches Material an dem Organoblech des Modulträgers 1 aufgetragen, um beispielsweise Aussparungen des Organoblechs zumindest teilweise auszufüllen. Bei einer Durchspritzung als einer speziellen Anspritzung wird thermoplastisches Material durch das Organoblech des Modulträgers 1 hindurch gespritzt. Für den Spritzvorgang wird ein thermoplastischer Kunststoff verwendet, wie zum Beispiel Polypropylen.

Bei den Aussparungen in dem Organoblech des Modulträgers 1 kann es sich beispielsweise um Vertiefungen in dem Organoblech handeln oder um Öffnungen, die durch das Organoblech hindurch gehen. Die Anspritzungen 8 können die Aussparungen vollständig oder auch nur teilweise ausfüllen. Des Weiteren können die Anspritzungen 8 Strukturen definieren, welche sich von der Hauptebene des Modulträgers 1 abheben.

Beispielsweise ist es möglich, mittels der Anspritzungen 8 mit großer Präzision Strukturen zu schaffen. Auch ist es möglich, durch die Anspritzungen 8 einen Überschuss an Material zu generieren, welcher (durch ein Werkzeug) zumindest teilweise wieder abgetragen wird. Dadurch können vordefinierte Strukturen an dem Organoblech des Modulträgers 1 gebildet werden.

Die Anspritzungen 8 können neben Schnittstellen für Funktionselemente beispielsweise auch Bereiche mit erhöhter Steifigkeit (gegenüber angrenzenden Bereichen) definieren. In weiteren Ausführungsformen können die Anspritzungen Eingrenzungen, wie Wände, Dichtungen oder Zapfen (beispielsweise für Positionierungszwecke), Festlegungsbereiche und/oder Bereiche mit erhöhtem Materialaufkommen (zur Aufnahme von Befestigungsmitteln) definieren.

Gemäß den Figuren 6A und 6B umgreift die Umspritzung 7 im Querschnitt den äußeren Rand 15 des Organoblechs des Modulträgers 1. Gleichzeitig ist dabei der zentrale Bereich des Modulträgers 1 durch die Umspritzung 7 ringförmig (vollständig) umgeben. Die Umspritzung 7 kann in einer Ausführungsvariante, welche hier dargestellt ist, einen Dichtungsrand definieren. Der Dichtungsrand sorgt bei einem bestimmungsgemäßen Einbau des Türmoduls T an der Türstruktur 5 dafür, dass der äußere Rand 15 des Organoblechs des Modulträgers 1 dichtend mit der Türstruktur 5 abschließt.

Auf der Innenseite des Modulträgers 1 ist der Anbindungsbereich 17, an welchem der Fensterheberantrieb 31 angeordnet werden kann, ausgebildet. Dabei ist eine Schalldämmwand 16 in dem Anbindungsbereich 17 angeordnet. Die Schalldämmwand 16 ist durch eine Anspritzung gebildet. Bei einer bestimmungsgemäßen Festlegung des Fensterheberantriebs 31 in dem Anbindungsbereich 17 ist zumindest ein Antriebsmotor 310 von der Schalldämmwand 16 umgeben.

In einer weiteren Ausführungsform kann die Schalldämmwand 16 lamellenartig ausgebildet sein, um beispielsweise ein Dämmmaterial in der Schalldämmwand 16 aufzunehmen. Der Anbindungsbereich 17 kann mit einer Abdeckung abgedeckt werden. Falls eine Schalldämmwand 16 vorhanden ist, kann die Abdeckung auf die Schalldämmwand 16 aufgebracht werden. Die Schalldämmwand 16 dient zur Dämmung von Antriebsgeräuschen des Antriebsmotors 310.

Des Weiteren befindet sich auf der Innenseite des Modulträgers 1, innerhalb des Anbindungsbereichs 17, ein Versteifungsbereich 9. Dieser ist durch eine Ausformung des Organoblechs des Modulträgers 1 gebildet. In einer weiteren Ausführungsform kann er auch durch eine Anspritzung ausgebildet sein. Insbesondere ist an dem Anbindungsbereich 17 eine Öffnung 311 für eine Antriebswelle des Kraftfahrzeugfensterhebers 3, welche durch den Modulträger 1 hindurch geht, ausgebildet.

Entlang des gesamten Randbereichs des Modulträgers 1 ist eine Mehrzahl Anspritzungen 89a an dem Modulträger 1 angeordnet. Diese Anspritzungen 89a dienen zur Festlegung des Türmoduls T an der Türstruktur 5. Bei der hier dargestellten Ausführungsform handelt es sich um Bajonettverbindungsstellen. Des Weiteren sind in dem Randbereich des Modulträgers 1 eine Mehrzahl Anspritzungen 89b angeordnet, welche zur Festlegung einer Türinnenverkleidung an dem Modulträger 1 ausgebildet sind. Die Anspritzungen 89a und 89b füllen dabei jeweils als Öffnungen ausgebildete Aussparungen in dem Organoblech des Modulträgers 1 zumindest teilweise aus.

Des Weiteren sind zwei im Wesentlichen vertikal verlaufende, entlang der Fahrzeugvertikalachse z, Anspritzungen 8 dargestellt, die zur Festlegung der Führungsschienen 30a und 30b auf der Außenseite des Modulträgers 1 ausgebildet sind. Auf der Innenseite des Modulträgers 1 weisen die im Wesentlichen vertikal verlaufenden Anspritzungen 8 jeweils drei Schraubendome 83 auf. Diese definieren einen Überschuss an Material an dem Modulträger 1, in welchen Befestigungsmittel, wie zum Beispiel Schrauben, von der Außenseite des Modulträgers 1 her eingebracht werden können.

Auf der Außenseite des Modulträgers 1 sind, korrespondierend zu den (sechs) Schraubendomen 83, (sechs) Anspritzungen 84 zur Festlegung der Führungsschienen 30a und 30b ausgebildet. Die Anspritzungen 83 und 84 sind durch den Modulträger 1 hindurch verbunden. Zwischen den Anspritzungen 83, 84 zur Festlegung der Führungsschienen 30a und 30b und, entlang der Fahrzeugvertikalachse z, oberhalb der Schalldämmwand 16 befindet sich eine Anspritzung 89c, die zur Festlegung eines Airbagsensors an dem Modulträger 1 ausgebildet ist. Jene Anspritzung 89c füllt eine Aussparung in dem Organoblech des Modulträgers 1 teilweise aus und definiert dabei selbst eine Öffnung, welche kleiner ist als die Aussparung in dem Modulträger 1.

Wie bereits im Zusammenhang mit der Figur 2 erwähnt, sind (drei) Anspritzungen 86 zur Festlegung des Türsteuergeräts an dem Modulträger 1 im vorderen Bereich des Türmoduls T und, entlang der Fahrzeugvertikalachse z, ungefähr mittig angeordnet. Sie sind sowohl von der Innenseite als auch von der Außenseite des Modulträgers 1 erkennbar.

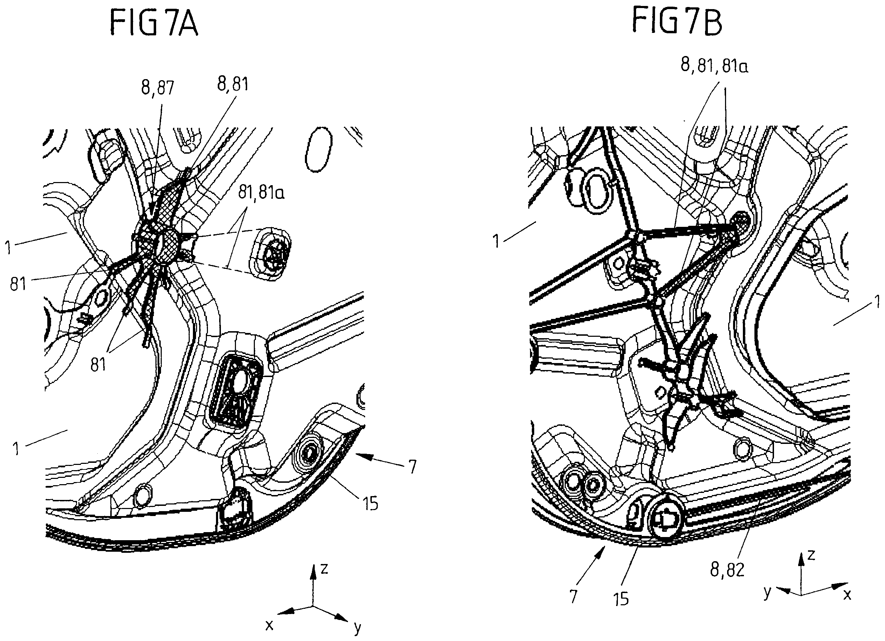

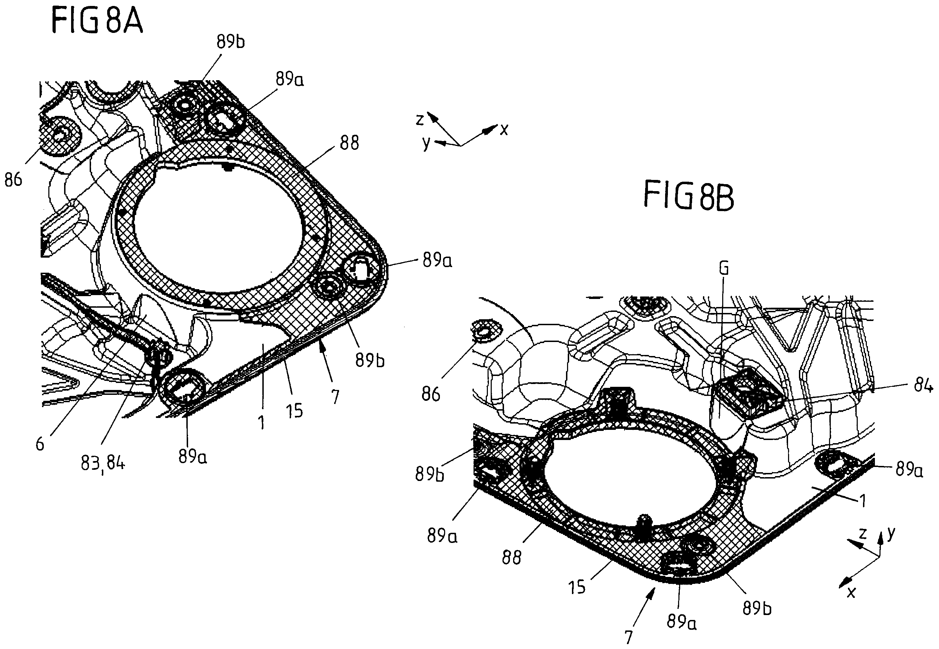

Ebenfalls im Zusammenhang mit Figur 2 wurde die Anspritzung 88 zur Festlegung eines Lautsprechers an dem Modulträger 1 erwähnt. Sie ist in der vorderen, unteren Ecke des Türmoduls 1 ausgebildet. Sie ist dabei im Wesentlichen kreisförmig ausgeführt, mit einer Aussparung etwa in der Mitte, zur Aufnahme eines Lautsprecherkörpers. Auf weitere Einzelheiten dieser Anspritzung 88 wird in den Figuren 8A und 8B eingegangen werden; und eine Anspritzung 87 zur Festlegung eines Türzuziehgriffs wird im Detail in den Figuren 7A und 7B beschrieben.

Im, entlang der Fahrzeuglängsachse x, hinteren und, entlang der Fahrzeugvertikalachse z, unteren Bereich des Organoblechs des Modulträgers 1 ist eine Versteifungsrippe 82 auf der Innenseite des Modulträgers 1 angeordnet, welche sich im Wesentlichen entlang der Fahrzeuglängsachse x erstreckt. Die Versteifungsrippe 82 ist durch eine Anspritzung gebildet, welche direkt auf dem Organoblech des Modulträgers 1 angeordnet ist. Die Versteifungsrippe 82 verbindet eine Anspritzung 89a zur Festlegung des Türmoduls T an der Türstruktur 5 mit der Umspritzung 7 des äußeren Randes 15 des Organoblechs des Modulträgers 1. Die Versteifungsrippe 82 erhöht die Festigkeit/Steifigkeit des äußeren Randes 15.

Auf der Außenseite des Modulträgers 1 ist weiterhin eine Anspritzung 85 in dem Anbindungsbereich 17 angeordnet, die zur Festlegung des Fensterheberantriebs 31 an dem Modulträger 1 ausgebildet ist. In der Mitte der Anspritzung 85 befindet sich die Öffnung 311, durch welche hindurch sich die Antriebswelle des Kraftfahrzeugfensterhebers 3 erstrecken kann. Von der kreisförmigen Öffnung 311 gehen sternförmig (drei) Stege ab. Diese umfassen an ihren Enden Verbindungsschnittstellen 312a, 312b, 312c zur Festlegung des Fensterheberantriebs 31 an dem Modulträger 1.

Des Weiteren befinden sich auf der Außenseite des Modulträgers 1 zwei Anspritzungen 89d, die zur Positionierung des Türmoduls T an der Türstruktur 5 ausgebildet sind. Die Anspritzungen 89d weisen in dieser Ausführungsform eine Zapfenform auf. Der erste Zapfen ist, entlang der Fahrzeugvertikalachse z, mittig, und, entlang der Fahrzeuglängsachse x, am vorderen Ende des Modulträgers 1, neben dem äußeren Rand 15, an dem Organoblech des Modulträgers 1 angeordnet. Der zweite Zapfen ist, entlang der Fahrzeugvertikalachse z, etwas tiefer angeordnet als der erste Zapfen und, entlang der Fahrzeuglängsachse x, am anderen Ende des Modulträgers 1, dem hinteren Ende, angeordnet.

In den Figuren 7A und 7B ist ein Bereich des Modulträgers 1 vergrößert dargestellt, welcher eine Anspritzung 87 zur Festlegung eines Türzuziehgriffs umfasst. In Figur 7A ist die Außenseite und in Figur 7B die Innenseite jenes Bereichs des Modulträgers 1 gezeigt. Die besagte Anspritzung 87 weist eine strahlenförmige Rippenstruktur auf, mit einer Mehrzahl Rippen 81, die von einem zylinderförmigen Zentrum der Außenseite des Modulträgers 1 ausgehen. Zwei der Rippen 81 sind hierbei als durchtauchende Rippen 81a ausgebildet. Diese sind im Gegensatz zu den übrigen Rippen sowohl auf der Außenseite als auch auf der Innenseite des Modulträgers 1 angeordnet.

Die durchtauchenden Rippen 81a sind durch Anspritzungen in Form je einer Durchspritzung des Organoblechs des Modulträgers 1 gebildet. Jedoch wurden hierfür vor dem Spritzvorgang keine Öffnungen in dem Organoblech angefertigt. Vielmehr sind im Zuge der Durchspritzung des Organoblechs die erforderlichen Öffnungen durch das thermoplastische Material selbst geschaffen worden. In einer anderen Variante können zunächst Aussparungen in dem Organoblech gebildet werden, durch die hindurch Rippen 81a durch das Organoblech geführt sind. Durch die Anordnung von Rippen 81a sowohl auf der Außenseite als auch auf der Innenseite des Modulträgers 1 kann die Steifigkeit und Stabilität der Anspritzung 87 für den Türzuziehgriff erhöht werden.

In den Figuren 8A und 8B ist ein Bereich des Modulträgers 1, der die Anspritzung 88 zur Festlegung eines Lautsprechers umfasst, vergrößert dargestellt. In Figur 8A ist die Innenseite und in Figur 8B die Außenseite des Modulträgers 1 gezeigt. An die Anspritzung 88 grenzt eine Wandung 6, die durch eine Ausprägung des Organoblechs des Modulträgers 1 gebildet ist. Die Wandung 6 definiert somit eine Aussparung in dem Organoblech des Modulträgers 1, welche mit jener Anspritzung 88 zumindest teilweise ausgefüllt ist.

Die Wandung 6 grenzt hierbei auch (direkt) an eine Schnittstelle zur Festlegung der vorderen Führungsschiene 30a. Die Schnittstelle ist durch eine Aussparung des Organoblechs definiert, welche mit einer Anspritzung 8 zumindest teilweise ausgefüllt ist. Auf der Innenseite des Modulträgers 1 definiert diese Anspritzung 8 den Schraubendom 83 und auf der Außenseite die zugehörige Anspritzung 84 zur Festlegung der Führungsschiene 30a.

Die Wandung 6 ist ferner derart ausgebildet, dass sie sich unter einem Winkel von der Hauptebene des Modulträgers 1, und dabei von der Anspritzung 88 zu Festlegung eines Lautsprechers hinweg, erstreckt. Der Winkel zwischen der Wandung 6 und der Hauptebene des Modulträgers 1 beträgt zwischen 100° und 140°, insbesondere kann er im Wesentlichen 120° betragen. Die Wandung 6 dient im Ergebnis nicht nur der Festlegung eines Lautsprechers, sondern sie unterstützt auch die Schnittstelle zur Festlegung der Führungsschiene 30a.

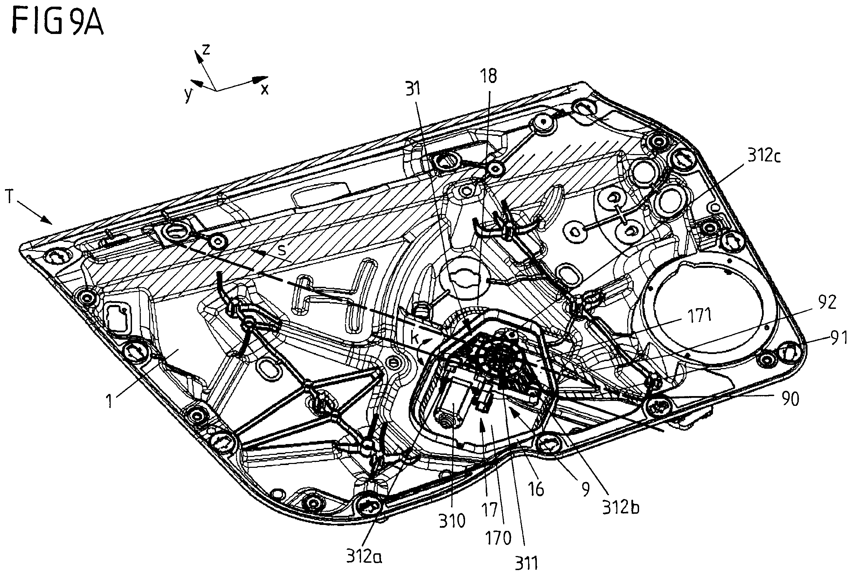

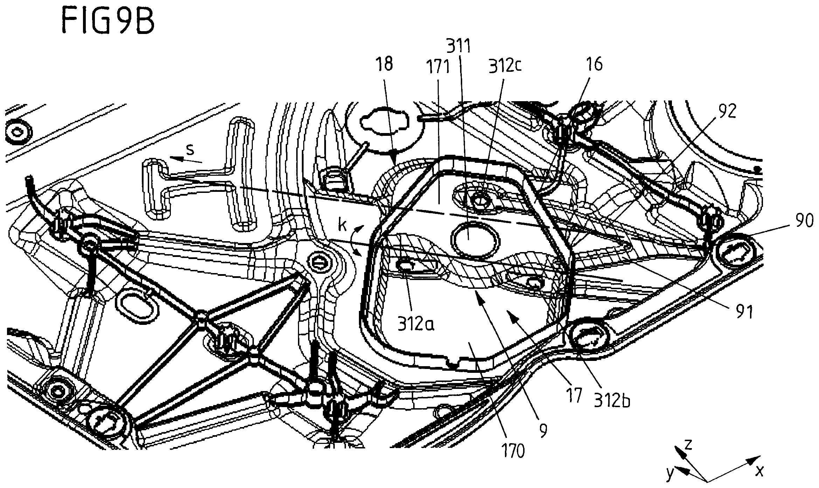

In Figur 9A ist die Innenseite des Türmoduls T dargestellt, wobei an dem Modulträger 1, in dem Anbindungsbereich 17, der Fensterheberantrieb 31 festgelegt ist. Ferner ist jener Bereich des Modulträgers 1 in Figur 9B vergrößert dargestellt, und zwar ohne den Fensterheberantrieb 31, um weitere Einzelheiten zu verdeutlichen. Der Anbindungsbereich 17 ist von der Ausprägung 18 des Organoblechs des Modulträgers 1 umgeben. Auf den Anbindungsbereich 17 ist die Schalldämmwand 16 aufgesetzt, welche den Fensterheberantrieb 31 umgibt. Die Schalldämmwand 16 dient zur Dämpfung von Antriebsgeräuschen des Fensterheberantriebs 31.

Ein Versteifungsbereich 9 erstreckt sich im Wesentlichen, innerhalb des Anbindungsbereichs 17, entlang der Erstreckungsrichtung s des flexiblen Zugmittels 32. Der Versteifungsbereich 9 verbindet dabei zwei gegenüberliegende Abschnitte der Ausprägung 18. Der Versteifungsbereich 9 ist zudem in seiner Kontur derart ausgebildet, dass er um die Öffnung 311 zumindest teilweise herum verläuft.

Durch den Versteifungsbereich 9 werden zwei Ebenen 170, 171 in dem Anbindungsbereich 17 definiert. Die erste Ebene 170 ist, entlang der Fahrzeugquerachse y, tiefer in dem Organoblech des Modulträgers 1, also weiter von dem Betrachter entfernt, ausgebildet, als die zweite Ebene 171. Die erste Ebene 170 weist eine Beabstandung entlang der Fahrzeugquerachse y von der zweiten Ebene 171 auf. Die beiden Ebenen 170, 171 sind somit zueinander versetzt.

Bei einer bestimmungsgemäßen Festlegung des Fensterheberantriebs 31 an dem Organoblech des Modulträgers 1 bzw. genauer in dem Anbindungsbereich 17 greift durch die Öffnung 311, welche im Bereich der zweiten Ebene 171 angeordnet ist, die Antriebswelle des Fensterheberantriebs 31 durch das Organoblech hindurch. Der Antriebsmotor 310 des Fensterheberantriebs 31 ist in dem Bereich der ersten Ebene 170 angeordnet. Der Antriebsmotor 310 befindet sich hierbei leicht oberhalb der Oberfläche des Organoblechs des Modulträgers 1. Er befindet sich in einer Art (fiktivem) "Schwebezustand".

Die (drei) Verbindungsschnittstellen 312a, 312b, 312c zur Festlegung des Fensterheberantriebs 31 an dem Modulträger 1 sind derart in dem Anbindungsbereich 17 angeordnet, dass zwei Verbindungsschnittstellen 312a, 312b auf der ersten Ebene 170 angeordnet sind. Die dritte Verbindungsschnittstellen 312c ist auf der zweiten Ebene 171 angeordnet.

Durch den Versteifungsbereich 9 wird eine Kippachse k definiert. Die Kippachse k erstreckt sich im Wesentlichen entlang der lokalen Erstreckungsrichtung s des flexiblen Zugmittels 32, genauer entlang der Erstreckungsrichtung s eines von dem Fensterheberantrieb 31 abgehenden Zugmittelabschnittes. Konkret wird durch den Versteifungsbereich 9 ein Verkippen des Fensterheberantriebs 31 entlang der Kippachse k erschwert, verglichen mit einem Verkippen um die Kippachse k. Der Fensterheberantrieb 31 kann somit eine Verkippung um die Kippachse k ausführen; und es sind Schwingungen des Antriebsmotors 310 um die Kippachse k möglich. Hierdurch können Antriebsgeräusche des Fensterheberantriebs 31 reduziert werden. Gleichzeitig wird eine Kraftübertragung in dem flexiblen Zugmittel 32 durch den Versteifungsbereich 9 unterstützt.

Die Amplitude der Schwingungen ist unter anderem bestimmt durch die Materialeigenschaften des Fensterheberantriebs 31, der Verbindungsschnittstellen 312a, 312b, 312c und des Versteifungsbereichs 9 sowie durch die Anordnung der Verbindungsschnittstellen 312a, 312b, 312c und des Antriebsmotors 310 relativ zu dem Versteifungsbereich 9.

Der Versteifungsbereich 9 kann außerhalb des Anbindungsbereichs 17 fortgeführt werden. So ist im Ausführungsbeispiel der Versteifungsbereich 9 entlang der Erstreckungsrichtung s des flexiblen Zugmittels 32 auf beiden Seiten des Anbindungsbereichs 17 fortgeführt.

Auf der unteren Seite des Anbindungsbereichs 17 ist der Versteifungsbereich 9 derart weitergeführt, dass er einen ersten Schenkel 91 eines Y-förmigen Versteifungsbereichs 9 bildet. Eine Basis 90 des Y-förmigen Versteifungsbereichs 9 erstreckt sich im Wesentlichen entlang der lokalen Erstreckungsrichtung s des flexiblen Zugmittels 32. Die Basis 90 ist vollständig außerhalb des Anbindungsbereichs 17 angeordnet. Ein zweiter Schenkel 92 des Versteifungsbereichs 9 ist teilweise außerhalb des Anbindungsbereichs 17 sowie teilweise innerhalb des Anbindungsbereichs 17 angeordnet. Der zweite Schenkel 92 liegt dabei entlang der Fahrzeuglängsachse x näher an der Vorderseite des Modulträgers 1 als der erste Schenkel 91.

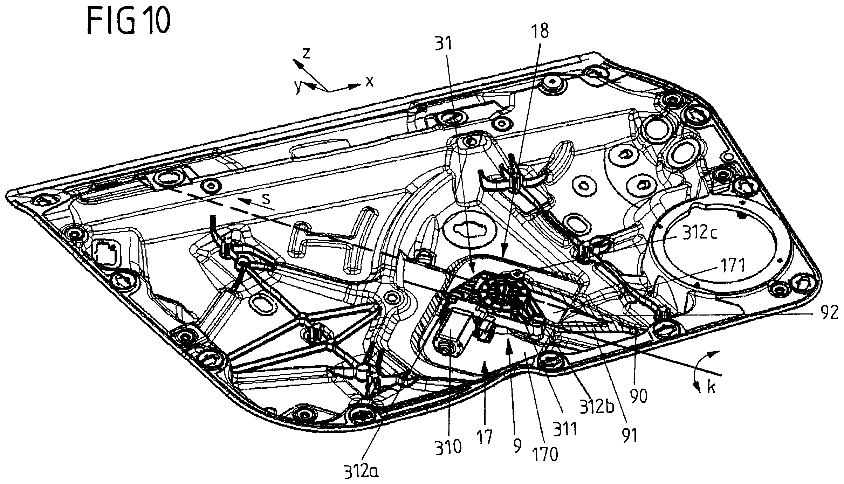

In Figur 10 ist das Türmodul T aus Figur 9A nochmals dargestellt, jedoch ohne eine Schalldämmwand 16 in dem Anbindungsbereich 17.

### Bezugszeichenliste

- 1: Modulträger
- 10: Kanal
- 100: Einführöffnung
- 101: Begrenzungswand
- 102: Verbindungsschnittstelle für ein Verstärkungselement
- 103: Verstärkungsleiste
- 11: Biegebereich
- 11a: Erster Biegeteilbereich
- 11b: Zweiter Biegeteilbereich
- 12: Bereich oberhalb des Biegebereichs in Fahrzeugvertikalachse (z)
- 12a: Zweiter Versteifungsbereich
- 13: Bereich unterhalb des Biegebereichs in Fahrzeugvertikalachse (z)
- 13a: Erster Versteifungsbereich
- 13b: An dem Modulträger festgelegte Funktionselemente
- 14: Dichtungselement
- 15: Äußerer Rand des Organoblechs des Modulträgers
- 16: Schalldämmwand
- 17: Anbindungsbereich
- 170: 1. Ebene des Anbindungsbereichs
- 171: 2. Ebene des Anbindungsbereichs
- 18: Ausprägung des Organoblechs des Modulträgers

- 2: Verstärkungselement
- 20: Rohr
- 21: Verbindungsschnittstelle für einen Modulträger
- 22: Befestigungsmittel

- 3: Kraftfahrzeugfensterheber
- 30a: Vordere Führungsschiene
- 30b: Hintere Führungsschiene
- 300a: Kopf der vorderen Führungsschiene
- 300b: Kopf der hinteren Führungsschiene
- 31: Fensterheberantrieb
- 310: Antriebsmotor
- 311: Öffnung für die Antriebswelle
- 312a: 1. Verbindungsschnittstelle für den Fensterheberantrieb
- 312b: 2. Verbindungsschnittstelle für den Fensterheberantrieb
- 312c: 3. Verbindungsschnittstelle für den Fensterheberantrieb
- 32: Flexibles Zugmittel

- 4: Spalt

- 5: Türstruktur
- 50: Fensterrahmenstruktur
- 51: Türkasten
- 52: Türinnenblech
- 53: Brüstungsbegrenzung

- 6: Wandung zwischen einer Schnittstelle zur Festlegung eines Lautsprechers und einer Schnittstelle zur Festlegung einer Führungsschiene

- 7: Thermoplastische Umspritzung

- 8: Thermoplastische Anspritzung
- 81: Rippe einer strahlenförmige Rippenstruktur
- 81a: Durchtauchende Rippe einer strahlenförmige Rippenstruktur
- 82: Versteifungsrippe
- 83: Schraubendom
- 84: Thermoplastische Anspritzung zur Festlegung einer Führungsschiene
- 85: Thermoplastische Anspritzung zur Festlegung eines Fensterheberantriebs
- 86: Thermoplastische Anspritzung zur Festlegung eines Türsteuergeräts
- 87: Thermoplastische Anspritzung zur Festlegung eines Türzuziehgriff
- 88: Thermoplastische Anspritzung zur Festlegung eines Lautsprechers
- 89a: Thermoplastische Anspritzung zur Festlegung eines Türmoduls an einer Türstruktur
- 89b: Thermoplastische Anspritzung zur Festlegung einer Türinnenverkleidung an einem Türmodul
- 89c: Thermoplastische Anspritzung zur Festlegung eines Airbagsensors
- 89d: Thermoplastische Anspritzung zur Positionierung des Modulträgers

- 9: Versteifungsbereich
- 90: Basis des Versteifungsbereichs
- 91: 1. Schenkel des Versteifungsbereichs
- 92: 2. Schenkel des Versteifungsbereichs

- A: Aussparung
- T: Türmodul
- k: Kippachse
- s: Erstreckungsrichtung flexibles Zugmittel
- x: Fahrzeuglängsachse
- y: Fahrzeugquerachse
- z: Fahrzeugvertikalachse

## Patentansprüche

1. Türmodul für eine Kraftfahrzeugtür, mit
- einem Modulträger (1), der zu einem wesentlichen Teil durch Organoblech gebildet ist,
- einem in dem Organoblech des Modulträgers (1) einstückig geformten, längserstreckten Kanal (10),
- einer entlang der Erstreckungsrichtung des Kanals (10) verlaufenden Einführöffnung (100), über die ein Verstärkungselement (2) der Kraftfahrzeugtür in den Kanal (10) einführbar ist, und
- mindestens einem an dem Modulträger (1) festgelegten Funktionselement (30a, 30b), das den Kanal (10) kreuzt und dadurch dessen längserstreckte Einführöffnung (100) teilweise überdeckt,
**dadurch gekennzeichnet,**
**dass** in dem Organoblech des Modulträgers (1) ein elastisch deformierbarer Biegebereich (11) ausgebildet ist, der ein zumindest abschnittsweise Aufbiegen des Kanals (10) und/oder ein Wegbiegen des Kanals (10) bezüglich des Funktionselements (30a, 30b) ermöglicht, um die Einführöffnung (100) des Kanals (10) zum Einführen des Verstärkungselements (2) freizulegen, und dass der Biegebereich (11) rückfedernd ausgebildet ist, so dass elastische Rückstellkräfte ein Zurückfedern des Kanals (10) nach dem Auf- oder Wegbiegen herbeiführen.

2. Türmodul nach Anspruch 1, **dadurch gekennzeichnet, dass** der Modulträger (1) versteifende Ausprägungen in dem Organoblech oder an dem Organoblech angebrachte versteifende Strukturen aus einem anderen Material aufweist, die sich nicht in den Biegebereich (11) erstrecken.

3. Türmodul nach Anspruch 1 oder 2, **dadurch gekennzeichnet, dass** der Biegebereich (11) und daran angrenzende Bereiche (12, 13) des Modulträgers (1) aus dem gleichen Material bestehen und die gleiche Materialdicke aufweisen.

4. Türmodul nach einem der vorhergehenden Ansprüche, **dadurch gekennzeichnet, dass**
- der Biegebereich (11) mindestens zwei Biegeteilbereiche (11a, 11b) mit unterschiedlicher Elastizität aufweist und / oder
- der Biegebereich (11) zumindest einen Teil der Begrenzungswand (101) des Kanals (10) enthält und / oder
- der Biegebereich (11) wenigstens einen an den Kanal (10) angrenzenden Bereich umfasst.

5. Türmodul nach einem der vorhergehenden Ansprüche, **dadurch gekennzeichnet, dass** der Kanal sich - bezogen auf den bestimmungsgemäß in eine Kraftfahrzeugtür eingebauten Zustand des Türmoduls (T) - zumindest mit einer Richtungskomponente entlang der Fahrzeuglängsachse (x) erstreckt.

6. Türmodul nach einem der vorhergehenden Ansprüche, **dadurch gekennzeichnet, dass** die Begrenzungswand (101) des Kanals (10) wenigstens eine Verstärkungsleiste (103), insbesondere in Form einer Anspritzung oder einer Materialverdickung, aufweist, welche sich entlang der Erstreckungsrichtung des Kanals (10) erstreckt, und dass der Biegebereich (11) wenigstens einen Bereich der Begrenzungswand (101) enthält, der nicht mit der Verstärkungsleiste (103) versehen ist.

7. Türmodul nach einem der vorhergehenden Ansprüche, **dadurch gekennzeichnet, dass** das mindestenes eine am Modulträger (1) festgelegte, den Kanal (10) kreuzende Funktionselement als eine Führungsschiene (30a, 30b) eines Fensterhebers ausgeführt ist.

8. Türmodul nach einem der vorhergehenden Ansprüche, **dadurch gekennzeichnet, dass** der Modulträger (1) im Bereich seines umlaufenden äußeren Randes ein Dichtungselement (14) aufweist, welches zumindest abschnittsweise eine Gleitfähigkeit aufweist, die ein Entlanggleiten des Modulträgers (1) an weiteren Bauteilen der Kraftfahrzeugtür, insbesondere an dem Verstärkungselement (2) und einer Türstruktur (5), ermöglicht.

9. Türmodul nach einem der vorhergehenden Ansprüche, **dadurch gekennzeichnet, dass** der Modulträger (1) im Bereich von Verbindungsschnittstellen (102) zur Verbindung des Modulträgers (1) mit dem Verstärkungselement (2) erhabene Auflagestellen aufweist.

10. Türmodul nach einem der vorhergehenden Ansprüche, **dadurch gekennzeichnet, dass** ein in dem Kanal (10) des Türmoduls (T) aufgenommenes Verstärkungselement (2) mit dem Modulträger (1) verbunden ist und mit diesem eine vormontierte Einheit bildet.

11. Kraftfahrzeugtür mit einer Türstruktur (5) und mit einem Türmodul (T) nach mindestens einem der vorhergehenden Ansprüche, wobei das Türmodul (T) an der Türstruktur (5) festgelegt ist.

12. Kraftfahrzeugtür nach Anspruch 11, **dadurch gekennzeichnet, dass**
- das Verstärkungselement (2) an der Türstruktur (5) festgelegt und in dem Kanal (10) des Türmoduls (T) aufgenommen ist und / oder
- das Verstärkungselement (2) als ein Bauteil der Türstruktur (5) ausgebildet ist, insbesondere als ein Bauteil, welches mit einer Fensterrahmenstruktur (50) und/oder einem Türkasten (51) verbunden ist, und / oder
- das Verstärkungselement (2) als einstückiges Bauteil eines Türinnenblechs (52) der Türstruktur (5) ausgebildet ist und / oder
- das Verstärkungselement (2) als geschlossenes Profilelement, insbesondere als Rohr, oder als offenes Profilelement ausgebildet ist.

13. Kraftfahrzeugtür nach einem der Ansprüche 11 oder 12, **dadurch gekennzeichnet, dass** ein Spalt (4) zwischen dem Modulträger (1) des Türmoduls (T) und dem mindestens einen Funktionselement (30a, 30b) oberhalb des Kanals (10) eine kleinere Ausdehnung entlang der Fahrzeugquerachse (y) aufweist als das Verstärkungselement (2) und dass dieser Spalt (4) durch Einwirkung auf den Biegebereich (11) aufweitbar ist.

14. Verfahren zum Verbinden eines Türmoduls (T) nach einem der Ansprüche 1 bis 10 mit einer Türstruktur (5) einer Kraftfahrzeugtür, wobei das mindestenes eine am Modulträger (1) festgelegte, den Kanal (10) kreuzende Funktionselement als eine Führungsschiene (30a, 30b) eines Fensterhebers ausgeführt ist und und das in den Kanal (10) einführbare Verstärkungselement (2) an der Türstruktur (5) angeordnet ist, wobei ein Spalt (4) zwischen dem Modulträger (1) und der mindestens einen Führungsschiene (30a, 30b) oberhalb des Kanals (10) eine kleinere Ausdehnung entlang der Fahrzeugquerachse (y) aufweist als das Verstärkungselement (2) und wobei Verfahren folgende Schritte umfasst:
- Positionieren des Türmoduls (T) bezüglich der Türstruktur (5), so dass das Verstärkungselement (2) einen oberen Kopf (300a, 300b) der mindestens einen Führungsschiene (30a, 30b) entlang der Fahrzeugvertikalachse (z) überragt,
- Verschieben des Modulträgers (1) entlang der Fahrzeugvertikalachse (z) nach oben, wobei das Verstärkungselement (2) so auf den Biegebereich (11) des Modulträgers (1) einwirkt, dass der Spalt (4) zwischen Modulträger (1) und Führungsschiene (30a, 30b) verbreitert wird und das Verstärkungselement (2) über die Einführöffnung (100) in den Kanal (10) des Modulträgers (1) eingeführt wird, und
- Verbinden des Türmoduls (T) mit der Türstruktur (5).

15. Verfahren nach Anspruch 14, **dadurch gekennzeichnet, dass** der Modulträger (1) entlang der Fahrzeugquerachse (y) seitlich an dem Verstärkungselement (2) anliegt und dass der Modulträger (1) beim Verschieben entlang der Fahrzeugvertikalachse (z) zur Aufweitung des Spaltes (4) außerdem antlang der Fahrzeugquerachse (y) bewegt wird.

## Claims

1. A door module for a motor vehicle door, having
- a module carrier (1) which is formed substantially by organic sheet,
- a longitudinally extending channel (10) which is formed integrally in the organic sheet of the module carrier (1),
- an insertion opening (100) which extends along the direction of extent of the channel (10) and via which a reinforcement element (2) of the motor vehicle door is insertable into the channel (10), and
- at least one functional element (30a, 30b) which is fixed to the module carrier (1) and which crosses the channel (10) and thereby partially covers the longitudinally extending insertion opening (100) thereof,
**characterized**
**in that**, in the organic sheet of the module carrier (1), there is formed an elastically deformable bending region (11) which enables the channel (10) to be bent open at least in sections, and/or enables the channel (10) to be bent away from the functional element (30a, 30b), in order to open up the insertion opening (100) of the channel (10) for the insertion of the reinforcement element (2), and in that the bending region (11) is of resilient form such that elastic restoring forces cause the channel (10) to spring back after the bending-open or bending-away movement.

2. The door module as claimed in claim 1, **characterized in that** the module carrier (1) has stiffening stamped protuberances in the organic sheet, or stiffening structures composed of a different material attached to the organic sheet, which do not extend into the bending region (11).

3. The door module as claimed in claim 1 or 2, **characterized in that** the bending region (11) and regions (12, 13) of the module carrier (1) adjoining said bending region are composed of the same material and have the same material thickness.

4. The door module as claimed in one of the preceding claims, **characterized in that**
- the bending region (11) has at least two bending subregions (11a, 11b) with different elasticities and/or
- the bending region (11) comprises at least a part of the delimiting wall (101) of the channel (10) and/or
- the bending region (11) comprises at least one region adjoining the channel (10).

5. The door module as claimed in one of the preceding claims, **characterized in that** the channel extends, in relation to the intended installed state of the door module (T) in a motor vehicle door, at least with a directional component along the vehicle longitudinal axis (x).

6. The door module as claimed in one of the preceding claims, **characterized in that** the delimiting wall (101) of the channel (10) has at least one reinforcement strip (103), in particular in the form of a molded-on portion or a material thickening, which extends along the direction of extent of the channel (10), and **in that** the bending region (11) comprises at least one region of the delimiting wall (101) which is not equipped with the reinforcement strip (103).

7. The door module as claimed in one of the preceding claims, **characterized in that** the at least one functional element which is fixed to the module carrier (1) and which crosses the channel (10) is designed as a guide rail (30a, 30b) of a window regulator.

8. The door module as claimed in one of the preceding claims, **characterized in that** the module carrier (1) has, in the region of its encircling outer edge, a seal element (14) which has, at least in sections, a sliding capability which allows the module carrier (1) to slide along further components of the motor vehicle door, in particular along the reinforcement element (2) and a door structure (5).

9. The door module as claimed in one of the preceding claims, **characterized in that** the module carrier (1) has raised contact points in the region of connecting interfaces (102) for the connection of the module carrier (1) to the reinforcement element (2).

10. The door module as claimed in one of the preceding claims, **characterized in that** a reinforcement element (2) received in the channel (10) of the door module (T) is connected to the module carrier (1) and forms a preassembled unit together therewith.

11. A motor vehicle door having a door structure (5) and having a door module (T) as claimed in at least one of the preceding claims, wherein the door module (T) is fixed to the door structure (5).

12. The motor vehicle door as claimed in claim 11, **characterized in that**
- the reinforcement element (2) is fixed to the door structure (5) and is received in the channel (10) of the door module (T) and/or
- the reinforcement element (2) is formed as a component of the door structure (5), in particular as a component which is connected to a window frame structure (50) and/or to a door case (51) and/or
- the reinforcement element (2) is formed as an integral component of a door inner panel (52) of the door structure (5) and/or
- the reinforcement element (2) is formed as a closed profile element, in particular as a tube, or as an open profile element.

13. The motor vehicle door as claimed in claim 11 or 12, **characterized in that** a gap (4) between the module carrier (1) of the door module (T) and the at least one functional element (30a, 30b) above the channel (10) has a smaller extent along the vehicle transverse axis (y) than the reinforcement element (2), and **in that** said gap (4) can be enlarged by action on the bending region (11).

14. A method for connecting a door module (T) as claimed in one of claims 1 to 10 to a door structure (5) of a motor vehicle door, wherein the at least one functional element which is fixed to the module carrier (1) and which crosses the channel (10) is designed as a guide rail (30a, 30b) of a window regulator, and the reinforcement element (2) which is insertable into the channel (10) is arranged on the door structure (5), wherein a gap (4) between the module carrier (1) and the at least one guide rail (30a, 30b) above the channel (10) has a smaller extent along the vehicle transverse axis (y) than the reinforcement element (2), and wherein the method comprises the following steps:
- positioning the door module (T) with respect to the door structure (5), such that the reinforcement element (2) projects beyond an upper head (300a, 300b) of the at least one guide rail (30a, 30b) along the vehicle vertical axis (z),
- displacing the module carrier (1) upward along the vehicle vertical axis (z), wherein the reinforcement element (2) acts on the bending region (11) of the module carrier (1) such that the gap (4) between module carrier (1) and guide rail (30a, 30b) is widened, and the reinforcement element (2) is inserted via the insertion opening (100) into the channel (10) of the module carrier (1), and
- connecting the door module (T) to the door structure (5).

15. The method as claimed in claim 14, **characterized in that** the module carrier (1) bears laterally against the reinforcement element (2) along the vehicle transverse axis (y), and **in that** the module carrier (1), during the displacement along the vehicle vertical axis (z) for the widening of the gap (4), is furthermore moved along the vehicle transverse axis (y).

## Revendications

1. Module de porte pour une porte de véhicule automobile, avec
- un support de module (1), qui est formé en grande partie par une tôle organique,
- un canal (10) étendu en longueur, formé d'un seul tenant dans la tôle organique du support de module (1),
- une ouverture d'introduction (100) s'étendant le long de la direction d'extension du canal (10), par le biais de laquelle un élément de renforcement (2) de la porte de véhicule automobile peut être introduit dans le canal (10), et
- au moins un élément fonctionnel (30a, 30b) fixé au support de module (1), qui croise le canal (10) et recouvre ainsi en partie son ouverture d'introduction (100) étendue en longueur,
**caractérisé en ce**
**qu'**une zone de flexion (11) élastiquement déformable est réalisée dans la tôle organique du support de module (1), qui permet une flexion concave au moins par section du canal (10) et/ou une flexion convexe du canal (10) par rapport à l'élément fonctionnel (30a, 30b) pour dégager l'ouverture d'introduction (100) du canal (10) pour l'introduction de l'élément de renforcement (2), et que la zone de flexion (11) est réalisée avec rappel élastique, de sorte que des forces de rappel élastiques provoquent un rappel élastique du canal (10) après la flexion concave ou convexe.

2. Module de porte selon la revendication 1, **caractérisé en ce que** le support de module (1) présente des reliefs rigidifiants dans la tôle organique ou des structures rigidifiantes appliquées sur la tôle organique en un autre matériau, qui ne s'étendent pas dans la zone de flexion (11).

3. Module de porte selon la revendication 1 ou 2, **caractérisé en ce que** la zone de flexion (11) et des zones (12, 13) contiguës à celle-ci du support de module (1) se composent du même matériau et présentent la même épaisseur de matériau.

4. Module de porte selon l'une quelconque des revendications précédentes, **caractérisé en ce que**
- la zone de flexion (11) présente au moins deux zones partielles de flexion (11a, 11b) avec des élasticités différentes et/ou
- la zone de flexion (11) contient au moins une partie de la paroi de délimitation (101) du canal (10) et/ou
- la zone de flexion (11) comprend au moins une zone contiguë au canal (10).

5. Module de porte selon l'une quelconque des revendications précédentes, **caractérisé en ce que** le canal s'étend, par rapport à l'état monté conforme du module de porte (T) dans une porte de véhicule automobile, au moins avec une composante de direction le long de l'axe longitudinal de véhicule (x).

6. Module de porte selon l'une quelconque des revendications précédentes, **caractérisé en ce que** la paroi de délimitation (101) du canal (10) présente au moins une barre de renforcement (103), en particulier sous la forme d'un moulage par injection ou d'un épaississement de matériau, laquelle s'étend le long de la direction d'extension du canal (10), et que la zone de flexion (11) contient au moins une zone de la paroi de délimitation (101), qui n'est pas pourvue de la barre de renforcement (103).

7. Module de porte selon l'une quelconque des revendications précédentes, **caractérisé en ce que** l'au moins un élément fonctionnel croisant le canal (10), fixé au support de module (1) est réalisé en tant que rail de guidage (30a, 30b) d'un lève-vitre.

8. Module de porte selon l'une quelconque des revendications précédentes, **caractérisé en ce que** le support de module (1) présente dans la zone de son bord extérieur circonférentiel un élément d'étanchéité (14), lequel présente au moins par section une capacité de coulissement, qui permet un coulissement du support de module (1) le long d'autres composants de la porte de véhicule automobile, en particulier de l'élément de renforcement (2) et d'une structure de porte (5).

9. Module de porte selon l'une quelconque des revendications précédentes, **caractérisé en ce que** le support de module (1) présente des points d'appui en relief dans la zone d'interfaces de liaison (102) pour la liaison du support de module (1) à l'élément de renforcement (2).

10. Module de porte selon l'une quelconque des revendications précédentes, **caractérisé en ce qu'**un élément de renforcement (2) reçu dans le canal (10) du module de porte (T) est relié au support de module (1) et forme une unité prémontée avec celui-ci.

11. Porte de véhicule automobile avec une structure de porte (5) et avec un module de porte (T) selon au moins une des revendications précédentes, dans laquelle le module de porte (T) est fixé à la structure de porte (5).

12. Porte de véhicule automobile selon la revendication 11, **caractérisée en ce que**
- l'élément de renforcement (2) est fixé à la structure de porte (5) et reçu dans le canal (10) du module de porte (T) et/ou
- l'élément de renforcement (2) est réalisé en tant que composant de la structure de porte (5), en particulier en tant que composant, qui est relié à une structure de cadre de fenêtre (50) et/ou à un caisson de porte (51), et/ou
- l'élément de renforcement (2) est réalisé en tant que composant d'un seul tenant d'une tôle intérieure de porte (52) de la structure de porte (5) et/ou
- l'élément de renforcement (2) est réalisé en tant qu'élément profilé fermé, en particulier en tant que tube, ou en tant qu'élément profilé ouvert.

13. Porte de véhicule automobile selon l'une quelconque des revendications 11 ou 12, **caractérisée en ce qu'**une fente (4) entre le support de module (1) du module de porte (T) et l'au moins un élément fonctionnel (30a, 30b) au-dessus du canal (10) présente une plus petite étendue le long de l'axe transversal de véhicule (y) que l'élément de renforcement (2) et que cette fente (4) peut être élargie par action sur la zone de flexion (11).

14. Procédé de liaison d'un module de porte (T) selon l'une quelconque des revendications 1 à 10 à une structure de porte (5) d'une porte de véhicule automobile, dans lequel l'au moins un élément fonctionnel croisant le canal (10), fixé au support de module (1) est réalisé en tant que rail de guidage (30a, 30b) d'un lève-vitre et l'élément de renforcement (2) pouvant être introduit dans le canal (10) est disposé au niveau de la structure de porte (5), dans lequel une fente (4) entre le support de module (1) et l'au moins un rail de guidage (30a, 30b) au-dessus du canal (10) présente une plus petite étendue le long de l'axe transversal de véhicule (y) que l'élément de renforcement (2) et dans lequel le procédé comprend les étapes suivantes :
- positionnement du module de porte (T) par rapport à la structure de porte (5) de sorte que l'élément de renforcement (2) dépasse une tête supérieure (300a, 300b) de l'au moins un rail de guidage (30a, 30b) le long de l'axe vertical de véhicule (z),
- déplacement du support de module (1) le long de l'axe vertical de véhicule (z) vers le haut, dans lequel l'élément de renforcement (2) agit sur la zone de flexion (11) du support de module (1) de sorte que la fente (4) entre le support de module (1) et le rail de guidage (30a, 30b) est élargie et l'élément de renforcement (2) est introduit dans le canal (10) du support de module (1) par le biais de l'ouverture d'introduction (100), et
- liaison du module de porte (T) à la structure de porte (5).

15. Procédé selon la revendication 14, **caractérisé en ce que** le support de module (1) s'appuie le long de l'axe transversal de véhicule (y) latéralement sur l'élément de renforcement (2) et que le support de module (1) est déplacé lors du déplacement le long de l'axe vertical de véhicule (z) pour l'élargissement de la fente (4) en plus le long de l'axe transversal de véhicule (y).
